(19) **Europäisches Patentamt European Patent Office Office européen des brevets**

(11) **EP 2 057 567 B1**

(12) **FASCICULE DE BREVET EUROPEEN**

(45) Date de publication et mention de la délivrance du brevet:
**31.10.2018 Bulletin 2018/44**

(51) Int Cl.:
**B60C 99/00** *(2006.01)* **G06F 17/50** *(2006.01)*

(21) Numéro de dépôt: **07823353.3**

(22) Date de dépôt: **26.07.2007**

(86) Numéro de dépôt international:
**PCT/FR2007/001296**

(87) Numéro de publication internationale:
**WO 2008/025892 (06.03.2008 Gazette 2008/10)**

(54) **PROCEDE DE SIMULATION DU COMPORTEMENT THERMO-MECANIQUE D'UN PNEU ROULANT SUR LE SOL**

VERFAHREN ZUR SIMULATION EINES UNTER LAST ROLLENDEN REIFENS

METHOD FOR SIMULATING THE THERMOMECHANICAL BEHAVIOUR OF A TYRE ROLLING ON THE GROUND

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **01.09.2006 FR 0607706**

(43) Date de publication de la demande:
**13.05.2009 Bulletin 2009/20**

(73) Titulaire: **Compagnie Générale des Etablissements Michelin**
**63000 Clermont-Ferrand (FR)**

(72) Inventeurs:
- **FEVRIER, Pierre**
  **63100 Clermont-Ferrand (FR)**
- **MARTIN, Hervé**
  **8003 Zürich (CH)**
- **FANDARD, Gérard**
  **63000 Clermont-Ferrand (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A- 1 516 751**

- **FUTAMURA SHINGO ET AL: "SIMPLIFYING THE THERMAL ANALYSIS ROLLING TIRE WITH THE DEFORMATION INDEX METHOD" TECHNICAL PAPERS - AMERICAN CHEMICAL SOCIETY, RUBBER DIVISION, XX, XX, 17 mai 2004 (2004-05-17), page 27PP, XP009079971**
- **TEODORESCU ET AL: "INFLUENCE FACTORS ON TRUCK TYRE ROLLING RESISTANCE" POLYTECHNICAL UNIVERSITY OF BUCHAREST. SCIENTIFIC BULLETIN. SERIES D: MECHANICAL ENGINEERING, UNIVERSITATEA POLITEHNICA BUCURESTI, BIBLIOTECA CENTRALA,, RO, vol. 62, no. 4, 2000, pages 65-73, XP009079985 ISSN: 1454-2358**
- **PLUMMER A R: "MODEL-IN-THE-LOOP TESTING" PROCEEDINGS OF THE INSTITUTION OF MECHANICAL ENGINEERS. PART I. JOURNAL OF SYSTEMS AND CONTROL ENGINEERING, MECHANICAL ENGINEERS PUBL., LONDON, GB, vol. 220, no. I3, mai 2006 (2006-05), pages 183-199, XP009080014 ISSN: 0959-6518**
- **CHANG-RO LEE ET AL: "Validation of a FEA Tire Model for Vehicle Dynamic Analysis and Full Vehicle Real Time Proving Ground Simulations" SEA PAPER NUMBER 971100, 1997, pages 1-8, XP002423150**

**Description**

L'invention concerne, de façon générale, les techniques liées à l'équipement en pneumatiques des véhicules à moteurs.

Plus précisément, l'invention concerne un procédé de simulation du comportement physique d'un pneu équipant un véhicule en situation de roulement sur le sol, avec lequel la bande de roulement du pneu présente une aire de contact incluant au moins une zone de contact adhérent et au moins une zone de contact glissant, ce procédé comprenant au moins des opérations de modélisation, des opérations d'affectation de valeurs numériques, et des opérations de résolution, les opérations de modélisation consistant au moins à établir, par application de lois physiques connues et / ou construites par expérimentation spécifique, et en tant que premier modèle, un modèle des efforts longitudinaux, des efforts transversaux, et d'un couple d'auto-alignement, transmis par le pneu entre le sol et le véhicule, en fonction de paramètres physiques spécifiques, incluant un coefficient d'adhérence et un module de cisaillement du mélange caoutchoutique (gomme) de la bande de roulement du pneu, et en fonction de paramètres dynamiques liés aux conditions physiques de roulement et d'utilisation du pneu, le couple d'auto-alignement étant lié à l'intensité des efforts longitudinaux et transversaux et à leur distribution dans l'aire de contact, les opérations d'affectation consistant au moins à attribuer des valeurs numériques aux paramètres dynamiques et aux paramètres spécifiques, et les opérations de résolution consistant au moins à déduire, en utilisant au moins le premier modèle et les valeurs attribuées aux paramètres dynamiques et aux paramètres physiques spécifiques, des valeurs des efforts longitudinaux, des efforts transversaux, et du couple d'auto-alignement. Par exemple, le document de brevet EP 1 516 751 décrit un tel procédé de simulation du comportement physique d'un pneu. Toutefois, un tel procédé ne permet pas de fournir des valeurs totalement réalistes des efforts longitudinaux, des efforts transversaux, et du couple d'auto-alignement du pneu.

Plusieurs autres procédés de simulation de pneu sont connus de l'homme du métier, et des exemples en sont donnés dans les documents de brevets EP 1 371 534 et US 2001/0020386.

Le procédé le plus connu, mis au point par M. Pacejka en 1996 et diffusé sous le nom de "Magic Formula", modélise le pneu au moyen de paramètres dépourvus de lien causal avec la physique, et s'avère ainsi impropre à rendre compte de façon fidèle des efforts transmis par un pneu, a fortiori dans des situations de sollicitations importantes et / ou variables.

Bien que certains des procédés de simulation plus récents, et notamment ceux décrits dans les documents de brevets précités, utilisent un modèle physique plus ou moins complet du pneu, ces procédés ne permettent pas de fournir des valeurs totalement réalistes des efforts longitudinaux, des efforts transversaux, et du couple d'auto-alignement du pneu. L'invention, qui se situe dans ce contexte, a pour but de dépasser les limitations des procédés existants.

A cette fin, le procédé de l'invention, par ailleurs conforme à la définition générique qu'en donne le préambule ci-dessus, est essentiellement caractérisé en ce que les opérations de modélisation comprennent aussi l'établissement, en tant que second modèle, d'un modèle local d'échauffement exprimant des variations d'une température de contact de la bande de roulement avec le sol depuis l'entrée jusqu'à la sortie de l'aire de contact par suite du contact et du glissement de la bande de roulement avec le sol, et l'établissement, en tant que troisième modèle, d'un modèle global d'échauffement et de flux thermique, ce troisième modèle exprimant des variations, sur une période d'au moins un tour de roue, d'une température périphérique de la bande de roulement et d'une température interne du pneu en fonction de valeurs antérieurement connues ou estimées des températures périphérique et interne, d'un coefficient de conduction thermique de la bande de roulement, et de phénomènes à composante thermodynamique tels que déformations internes subies par le pneu, échanges thermiques entre le pneu et son environnement, et glissement de la bande de roulement sur le sol, en ce qu'au moins le coefficient d'adhérence et le module de cisaillement interviennent dans le premier modèle comme des variables respectivement fonctions de la température périphérique et de la température interne, en ce que la valeur de la température périphérique, obtenue par des opérations de résolution afférentes au troisième modèle, est utilisée par des opérations de résolution afférentes au deuxième modèle pour prendre en compte la dépendance en température du coefficient d'adhérence, et en ce que la valeur de la température interne, obtenue par des opérations de résolution afférentes au troisième modèle, est utilisée par des opérations de résolution afférentes au premier modèle pour prendre en compte la dépendance en température du module de cisaillement du mélange caoutchoutique de la bande de roulement du pneu.

Il est avantageux de prévoir que le premier modèle comprenne des équations liées à des conditions d'équilibre des forces élémentaires de cisaillement et de glissement de la bande de roulement dans l'aire de contact, que le procédé de l'invention comprenne au moins une phase itérative de calcul constituée d'une succession de cycles de calcul, et que chaque cycle de calcul comprenne au moins une opération de résolution afférente au premier modèle et une opération de résolution afférente au deuxième modèle.

Le procédé de l'invention, dans un mode de réalisation possible, peut être mis en oeuvre en prévoyant que l'aire de contact soit discrétisée au moins dans une première de ses dimensions, que chaque cycle de chaque phase itérative comprenne une série d'opérations d'analyse des conditions d'équilibre des forces élémentaires de cisaillement et de glissement sur des surfaces élémentaires respectives différentes de l'aire de contact, distribuées le long de la première dimension de l'aire de contact, et que chaque cycle de la phase itérative soit interrompu lorsque l'ensemble des surfaces élémentaires considérées lors de ce cycle recouvre l'aire de contact.

Dans son mode de réalisation préféré, le procédé de l'invention peut être mis en oeuvre en prévoyant que le premier modèle soit établi en considérant que l'aire de contact comprend une unique zone de contact adhérent et une unique zone de contact glissant séparées l'un de l'autre par un point de passage, que le premier modèle prenne la forme d'un système d'équations exprimées au moins en fonction des paramètres dynamiques, des paramètres spécifiques, et de l'abscisse du point de passage, que chaque phase itérative soit dédiée à des phénomènes apparaissant pendant un intervalle de temps élémentaire correspondant, et que chaque phase itérative soit mise en oeuvre pour résoudre, par approximations successives et au moins à partir de valeurs antérieurement connues ou estimées de l'abscisse du point de passage, des efforts transversaux, et du couple d'auto-alignement, de nouvelles valeurs de l'abscisse du point de passage, des efforts transversaux, et du couple d'auto-alignement qui résolvent le système d'équations du premier modèle pour les valeurs attribuées aux paramètres dynamiques et aux paramètres spécifiques, ce dont il résulte que les efforts longitudinaux, les efforts transversaux, et le couple d'auto-alignement du pneu peuvent être calculés en temps réel pendant le roulement du véhicule.

Dans ce cas, chaque nouveau cycle de calcul de chaque phase itérative comprend de préférence les opérations consistant au moins à :

- calculer une nouvelle valeur provisoire de l'abscisse du point de passage à partir des équations d'équilibre des forces élémentaires et des valeurs antérieurement connues ou estimées des efforts transversaux et du couple d'auto-alignement;
- calculer, à partir de la nouvelle valeur provisoire de l'abscisse du point de passage et des équations liant les efforts transversaux et le couple d'auto-alignement aux paramètres dynamiques, aux paramètres spécifiques, et à l'abscisse du point de passage, de nouvelles valeurs des efforts transversaux et du couple d'auto-alignement utilisables pour un éventuel cycle de calcul ultérieur;
- interrompre conditionnellement ladite phase itérative au moins lorsque l'écart entre la nouvelle valeur provisoire de l'abscisse du point de passage et la valeur antérieurement connue ou estimée de cette abscisse est inférieur à une limite de précision prédéterminée; et
- à l'interruption de ladite phase itérative, affecter aux efforts transversaux et au couple d'auto-alignement, en tant que valeurs pour cette phase, les nouvelles valeurs des efforts transversaux et du couple d'auto-alignement obtenues au dernier cycle de calcul.

En outre, le procédé de l'invention comprend alors avantageusement une opération mise en oeuvre après la fin de chaque phase itérative et consistant à mettre au moins à jour les paramètres dynamiques pour tenir compte des évolutions subies par ces paramètres pendant le temps d'exécution de la phase itérative, et à engager une nouvelle phase itérative.

Par ailleurs, les opérations de résolution afférentes au troisième modèle sont de préférence effectuées en dehors de chaque phase itérative.

Chaque phase itérative peut être précédée d'une phase préparatoire au cours de laquelle sont calculées des grandeurs contingentes, incluant les dimensions de l'aire de contact, en fonction des valeurs attribuées aux paramètres dynamiques et aux paramètres spécifiques, chaque grandeur contingente étant exploitée dans ladite phase itérative avec une valeur qui lui a été attribuée lors de la phase préparatoire.

L'invention concerne également l'application du procédé tel que précédemment défini à la simulation du comportement dynamique d'un véhicule doté d'un châssis et de plusieurs pneus en situation de roulement sur le sol, application dans laquelle chacun des modèles est exploité pour chaque pneu et associé à un même modèle dynamique de châssis, dans laquelle le modèle de châssis fournit auxdits modèles, pour chaque pneu, les valeurs de certains au moins des paramètres dynamiques, et dans laquelle le modèle de châssis exploite, pour chaque pneu, les valeurs des efforts longitudinaux, des efforts transversaux, et du couple d'auto-alignement obtenues par la mise en oeuvre desdits modèles.

Dans son mode de réalisation préféré, le procédé de l'invention peut ainsi être appliqué à la simulation en temps réel du comportement dynamique d'un véhicule.

D'autres caractéristiques et avantages de l'invention ressortiront clairement de la description qui en est faite ci-après, à titre indicatif et nullement limitatif, en référence aux dessins annexés, dans lesquels :

- la figure 1 est une vue schématique en élévation d'une roue équipée d'un pneu auquel le procédé de l'invention est appliqué;

- la figure 2 est une vue schématique de dessus agrandie de l'aire de contact du pneu de la figure 1 avec le sol, le pneu étant en situation de dérive par rapport au vecteur vitesse (axe X);

- la figure 3 est une vue schématique de face du pneu de la figure 1, le pneu étant en situation de carrossage ;

- la figure 4 est une vue schématique partielle et en coupe radiale d'un pneu représenté dans deux situations différentes de sollicitations;

- la figure 5 est une vue schématique en élévation d'un pneu représenté dans deux situations différentes de sollicitations;

- la figure 6 est une vue schématique de dessus d'un pneu subissant une torsion;

- la figure 7 est un schéma récapitulant les différentes grandeurs intervenant dans la mise en oeuvre du procédé de l'invention;

- la figure 8 est une vue schématique de dessus d'un pneu subissant diverses sollicitations;

- la figure 9 est une vue de dessus agrandie de l'aire de contact d'un pneu subissant diverses sollicitations, et sur laquelle apparaissent la trace de points et de trajectoires caractéristiques;

- la figure 10 représente, de façon tridimensionnelle, la loi liant le coefficient d'adhérence à la température de contact, et à la vitesse de glissement, pour une pression de contact donnée;

- la figure 11 représente la loi liant le module de cisaillement du mélange caoutchoutique de la bande de roulement du pneu à la température, pour un niveau donné de sollicitation en fréquence et déformation;

- la figure 12 est un schéma récapitulant les phénomènes thermiques pris en compte dans le modèle thermique global;

- la figure 13 est un organigramme illustrant la structure opérationnelle du mode de réalisation préféré du procédé de l'invention; et

- les figures 14a et 14b sont des organigrammes illustrant la structure opérationnelle d'un autre mode de réalisation possible du procédé de l'invention.

Comme annoncé précédemment, l'invention concerne notamment un procédé de simulation du comportement physique d'un pneu équipant un véhicule en situation de roulement sur le sol.

Dans une situation de roulement d'un pneu au sol, la bande de roulement du pneu présente avec le sol une aire de contact formée d'au moins une zone de contact adhérent et d'au moins une zone de contact glissant.

La finalité de ce procédé est de fournir, en fonction d'un certain nombre de grandeurs d'influence, les valeurs de divers efforts qui sont transmis par le pneu entre le sol et le véhicule.

Pour optimiser la compréhension de l'invention, la présente description fera usage des conventions d'écriture ci-après, dont une partie est déjà connue de l'homme du métier et utilisée dans des modèles de pneu existants.

| $\delta$ | Angle de dérive |
|---|---|
| $\delta'$ | Angle de dérive au niveau des nappes sommet |
| $\alpha_1$ | Angle de mise à plat (plysteer) |
| $\gamma$ | Angle d'inclinaison (carrossage) |
| $\tau$ | Taux de glissement longitudinal |
| Fx | Effort longitudinal |
| Fy | Effort transversal |
| Fz | Charge |
| $V$ | Vitesse des points du sol |
| $W_x$ | Vitesse des points du sommet suivant son axe |
| Mz | Couple d'auto-alignement |

(suite)

| Ny | Composante du couple d'auto-alignement liée à l'effort Fy |
|---|---|
| Nx | Composante du couple d'auto-alignement liée à la distribution des efforts Fx dans la largeur de l'aire de contact |
| $R_L$ | Rigidité latérale du pneu |
| $R_{LL}$ | Rigidité longitudinale du pneu |
| $k_T$ | Rigidité de torsion du pneu |
| $S_2$ | Souplesse à la flexion sur chant du bloc sommet |
| $\mu$ | Coefficient d'adhérence dynamique entre la gomme du pneu et le sol : $\mu(p, Vg, Ts)$ |
| $\mu_0$ | Coefficient d'adhérence statique |
| Lx | Longueur caractéristique de l'aire de contact |
| Ly | Largeur de l'aire de contact |
| ent | Taux d'entaillement de la bande de roulement |
| AssX | Coefficient d'assouplissement longitudinal de la bande de roulement |
| AssY | Coefficient d'assouplissement latéral de la bande de roulement |
| G* | Module de cisaillement du mélange caoutchoutique de la bande de roulement du pneu |
| $e_{KM}$ | Epaisseur de la bande de roulement |
| a | Demi-longueur de l'aire de contact |
| b | Abscisse de début de glissement dans l'aire de contact |
| Ti | Profil de température interne de la gomme, entre la surface du pneu et les nappes sommet |
| Ts | Température de surface moyenne de la bande de roulement |
| Tc | Température de contact à l'interface entre la gomme et le sol |
| Vg | Vitesse de glissement entre le pneu et le sol |
| $X_N, Y_N$ | Coordonnées des points du sommet du pneu (zone interne de la bande de roulement, à la base du pneu, à la verticale de l'aire de contact) |
| $X_k, Y_k$ | Coordonnées des points de la bande de roulement au niveau de l'interface avec le sol |

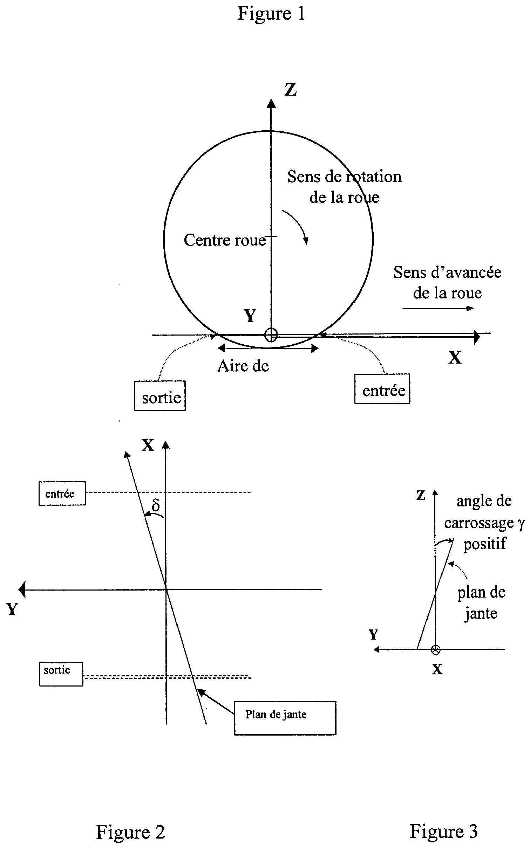

Les figures 1 à 3 précisent le repère utilisé comme référence.

Ce repère est défini par :

O : le point origine du repère au centre de l'aire de contact;

OX : l'axe parallèle au vecteur vitesse;

OY : l'axe perpendiculaire à OX, parallèle au plan du sol quel que soit le carrossage;

Dans ce repère, la convention de signe impose que : pour $\tau > 0$, un effort longitudinal est généré dans la direction de l'axe OX; pour $\delta > 0$, un effort latéral est généré dans la direction de l'axe OY, et pour $\gamma > 0$, un couple dit d'auto-alignement Mz négatif est généré, provoquant une poussée latérale négative (c'est-à-dire orientée dans la direction opposée à OY).

Les efforts transmis par le pneu entre le sol et le véhicule comprennent des efforts longitudinaux Fx, des efforts transversaux Fy, et un couple d'auto-alignement *Mz,* qui est lié à l'intensité des efforts longitudinaux et transversaux et à leur distribution dans l'aire de contact.

Les grandeurs d'influence comprennent typiquement d'une part des paramètres dynamiques, c'est-à-dire variables au moins en fonction du temps, et liés aux conditions physiques de roulement et d'utilisation du pneu, et d'autre part des paramètres physiques qui sont spécifiques au pneu considéré.

Les paramètres dynamiques comprennent l'angle de dérive, le taux de glissement, l'angle de carrossage, la charge, la vitesse, la pression de gonflage, les températures air et sol, les températures initiales du pneumatique, et le temps.

Les paramètres spécifiques comprennent les dimensions de l'aire de contact (longueur, largeur, coefficient de forme), le profil de pression p(x) le long de l'aire de contact, les rigidités longitudinale Kx et transversale Ky de la bande de roulement, les rigidités de la structure du pneu, à savoir la rigidité latérale RL, la rigidité longitudinale RLL, la rigidité radiale Rrr, et la rigidité de torsion $k_T$, la rigidité 1/S2 du bloc sommet, une loi d'adhérence $\mu$ du couple gomme/sol, des paramètres de transfert de longueur entre reliefs du pneu ("ribs"), et sont reliées aux paramètres dynamiques par des relations construites par expérimentation spécifique dont il est possible de rendre compte par les expressions données ci-après à titre d'exemple.

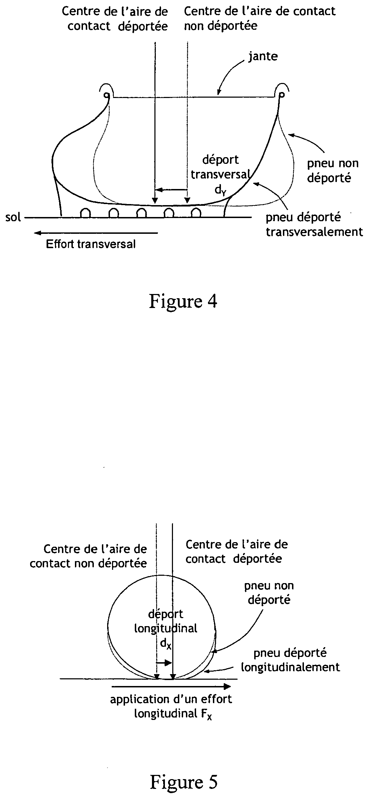

La rigidité latérale correspond à un déport dy de l'aire de contact (cf. figure 4) par rapport au plan de roue sous l'effet d'un effort latéral :

$$R_L = R_{L0} + R_{Lp}\, p$$

où $R_{L0}$ [N/m] représente la partie structurelle et $R_{Lp}$ [N/m/bars] la partie pneumatique, $p$ étant la pression exprimée en bars.

La rigidité longitudinale correspond à un déport dx de l'aire de contact (cf. figure 5) suivant l'axe longitudinal de la roue en présence d'un effort longitudinal $Fx$ :

$$R_{LL} = R_{LL0} + R_{LLp}\, p$$

où $R_{LL0}$ [N/m] représente la partie structurelle et $R_{LLp}$ [N/m/bar] la partie pneumatique, p étant la pression exprimée en bars.

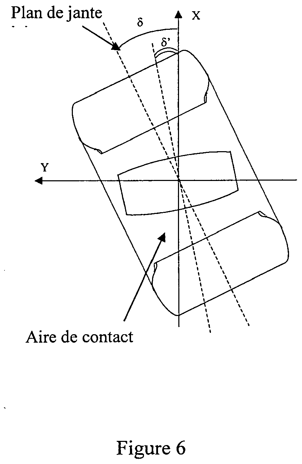

Le développement du couple d'auto-alignement Mz entraîne une torsion d'un angle $\Delta\delta$ de l'enveloppe autour de l'axe Z par rapport au plan de jante (cf. figure 6) :

$$\Delta\delta = \frac{M_z}{k_T}$$

La rigidité de torsion de l'enveloppe contient une composante structurelle $k_{T0}$ [N.m/rad] et une composante $k_{TZ}$ [m/rad] qui traduit la variation de la rigidité de torsion avec la charge par exemple de la forme :

$$k_T = \left( k_{T0} + k_{TZ} F_Z \right)\sqrt{p}$$

L'angle de dérive réel $\delta'$ pris par l'aire de contact s'exprime en fonction de l'angle de dérive au niveau de l'axe de la roue de la manière suivante :

$$\delta' = \delta + \frac{M_z}{k_T}$$

La déformation du sommet peut être modélisée par une loi du second degré avec une courbure au centre de l'aire de contact qui s'exprime par exemple de la manière suivante :

$$\rho = S_2 F y$$

où $S_2$ est un paramètre représentatif de la souplesse à la flexion sur chant.

La rigidité radiale relie la charge Fz à la flèche du sommet par rapport à la jante. Elle dépend de la pression et se décompose en deux termes : un terme structurel $R_{R0}$ [N/m] qui correspond à la rigidité radiale du pneumatique à pression nulle, et un terme pneumatique $R_{RP}$ [N/m/bar] :

$$R_R = R_{R0} + R_{Rp}\, p$$

La longueur de l'aire de contact est définie par :

$$Lx = a\sqrt{\frac{F_z}{p^c}} + b\frac{F_z}{p^c},$$

cette formulation permettant de prendre en compte l'effet de la charge et de la pression de gonflage.

La largeur de l'aire de contact est définie par :

$$Ly = Ly_c + 2 * Ly_e$$

où $Ly_c$ est la largeur des reliefs au centre du pneu et $Ly_e$ la largeur des reliefs aux épaules, calculée par la formule ci-dessus :

$$Ly_e = c\arctan\left[d\left(\frac{F_z}{p^{0.6}} - e\right)^2\right].$$

La surface effective de l'aire de contact est définie comme le produit de la largeur par la longueur, pondéré par l'entaillement et un coefficient de forme :

$$S_{ADC} = C_{forme}\ ent\ Lx\ Ly$$

Le coefficient de forme $C_{forme}$ prend en compte la variation de forme de l'aire de contact en fonction de la charge.

Lors de l'écrasement de la structure du pneu, le sommet prend une inclinaison $\alpha_1$ qui est une grandeur caractéristique de la structure étudiée.

Le profil de pression entre l'entrée et la sortie de l'aire de contact est déterminé de la manière suivante :

$$p(x) = \frac{2n+1}{2n}\frac{F_z}{S_{ADC}}\left(1 - \left(\frac{x}{Lx/2}\right)^{2n}\right),$$

Cette répartition de pression est telle que :

$$\int_{-Lx/2}^{Lx/2} p(x)\,dx = \frac{F_z}{S_{ADC}}.$$

A faible charge, le profil est plutôt de type parabolique (n = 1). A forte charge, le profil de pression est quasi uniforme.

De préférence, n est un réel variant linéairement avec la longueur de l'aire de contact *Lx*. Pour éviter qu'aux faibles charges *n* ne devienne trop faible (voire négatif), n est borné inférieurement à 1 de la façon suivante :

$$n = \max(1, n_a Lx + n_b).$$

Le procédé de l'invention utilise au moins un modèle mécanique (premier modèle) couplé à un modèle thermique local (deuxième modèle) et à un modèle thermique global (troisième modèle).

Chacun de ces modèles est établi au cours d'une phase préliminaire du procédé et prend la forme d'un système d'équations.

Ces modèles peuvent être établis de plusieurs manières, et notamment en utilisant des lois physiques connues de l'homme du métier, ou des lois plus ou moins approchées construites par expérimentation spécifique, de sorte que les équations par lesquelles s'expriment ces modèles peuvent prendre de multiples formes.

Ces modèles se caractérisent donc essentiellement par leurs grandeurs d'entrée, leurs grandeurs de sortie, et le fait qu'ils prennent chacun la forme d'un système d'équations rendant compte de phénomènes physiques observables en fonction de propriétés physiques quantifiables.

Les grandeurs de sortie du modèle mécanique sont les efforts longitudinaux Fx, les efforts latéraux Fy, et le couple d'auto-alignement Mz.

La grandeur de sortie du modèle thermique local est la température de la bande de roulement le long de l'aire de contact.

Et les grandeurs de sortie du modèle thermique global sont la température moyenne périphérique ou de surface Ts de la bande de roulement, et le profil de la température interne Ti de cette bande dans le sens de son épaisseur.

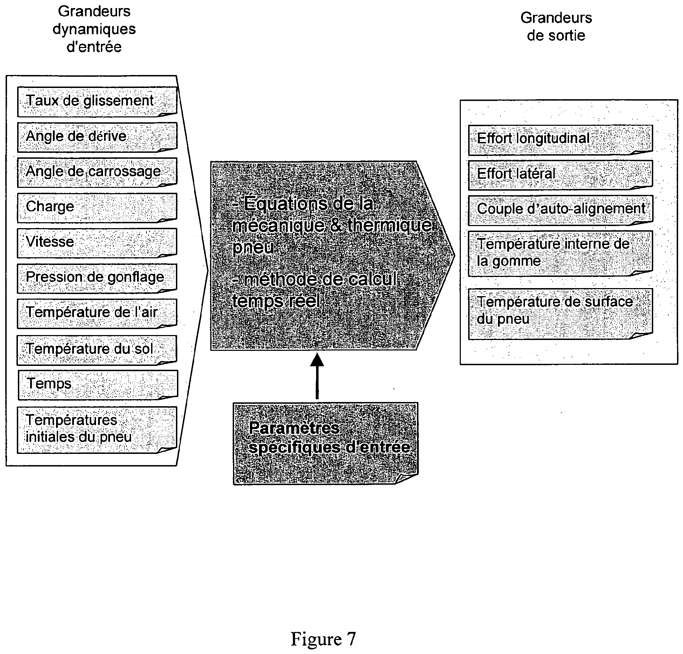

Les grandeurs d'entrée et de sortie de l'ensemble de ces modèles sont recensées sur la figure 7.

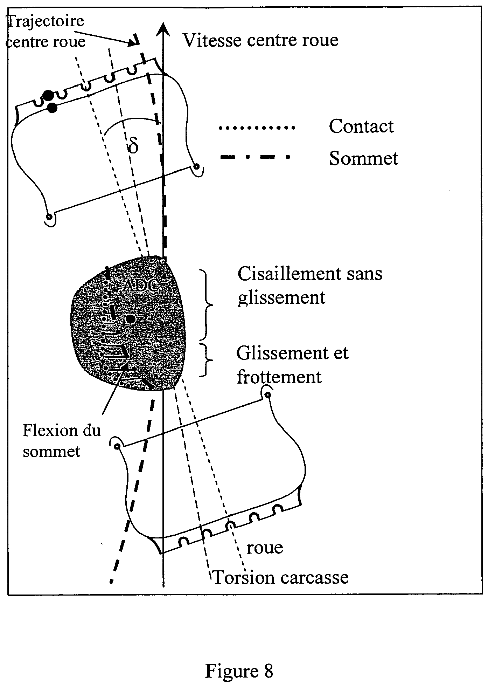

Dans le mode de réalisation préféré de l'invention, le modèle mécanique se caractérise en outre par le fait qu'il est établi en considérant d'une part que l'aire de contact comprend deux zones (figure 8), à savoir une zone de contact adhérent où l'effort est contrôlé par le cisaillement de la bande de roulement à déplacement imposé et une zone de contact glissant où l'effort est contrôlé par le coefficient de frottement entre la gomme et le sol, et en considérant d'autre part qu'il existe un point unique N d'abscisse "b" marquant le passage entre la zone de contact adhérent et la zone de contact glissant.

Les équations sont formulées selon ce principe, ce qui permet d'obtenir des expressions rapides à résoudre.

Un exemple de modèle mécanique avantageux est donné ci-après.

Dans cet exemple, la modélisation du fonctionnement de l'aire de contact est basée sur une approche de type « poil de brosse » avec une première phase de cisaillement en entrée de l'aire de contact et une seconde phase de glissement. Il est supposé que ces deux phases sont distinctes, uniques et connexes, et qu'il n'y a aucun mécanisme parasite de reprise de cisaillement lors de la phase de glissement.

Tous les développements qui suivent font l'hypothèse que les angles de dérive restent modérés (inférieurs à 20 degrés environ), de sorte que l'approximation $\tan(\delta) \approx \delta$ est valide et sera faite systématiquement.

$Kx$ et $Ky$ désignent les rigidités de la bande de roulement, qui peuvent être reliés au module de la gomme et aux caractéristiques de la sculpture de préférence selon la relation suivante :

$$\begin{cases} K_X = \dfrac{G * ent}{\dfrac{h_{scre}}{AssX} + h_{sc}} \\ K_Y = \dfrac{G * ent}{\dfrac{h_{scre}}{AssY} + h_{sc}} \end{cases}$$

$h_{scre}$ étant l'épaisseur de la sculpture, et $h_{sc}$ l'épaisseur de la sous-couche, telles que $e_{KM} = h_{scre} + h_{sc}$.

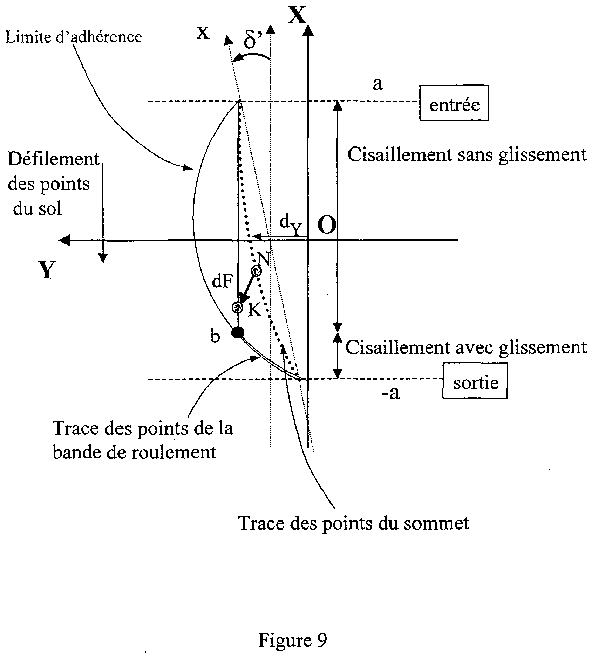

La figure 9 est un schéma fonctionnel de l'aire de contact. Le segment NK définit un élément de la bande de roulement ("poil de brosse"). N est le point situé au niveau du sommet et K est le point de la bande de roulement au niveau du sol. Le point d'abscisse b représente la transition entre le contact avec adhérence et le contact glissant.

En entrée de l'aire de contact (voir figure 9), l'élément de gomme de la bande de roulement n'est pas cisaillé ($X_N = X_K$).

Le cisaillement de la gomme a en fait plusieurs origines : une mise en dérive de la roue d'un angle $\delta$, une mise en carrossage d'un angle $\gamma$, et une différence entre la vitesse du point N du sommet et la vitesse de défilement des points du sol.

Sous l'hypothèse d'une déformation uniforme dans l'épaisseur de la bande de roulement, l'effort élémentaire généré par le cisaillement d'un l'élément de cette bande peut s'écrire :

$$dF_X = K_X(X_K - X_N)dS$$

$$dF_Y = K_Y(Y_K - Y_N)dS$$

où $dS$ est la surface élémentaire de l'élément NK de la bande de roulement.

L'équation de la trajectoire des points du sommet est approximée par la relation suivante:

$$Y_N = \delta' X_N - \frac{1}{2} S_2 F_Y X_N^{\ 2} + \frac{F_Y}{R_L} \, ,$$

expression dans laquelle $\delta$ est l'angle de dérive du sommet, qui diffère de l'angle de dérive du fait de la torsion de la structure du pneu, et qui répond à l'équation :

$$\delta' = \delta + \alpha 1 + \frac{M_Z}{k_T} \, .$$

En supposant que la relation $Y_K(a) = Y_N(a)$ soit satisfaite en entrée de l'aire de contact, il vient (équation 1) :

$$\boxed{Y_K - Y_N = \delta'(a - X_N) - \frac{1}{2} S_2 F_Y \left(a^2 - X_N^{\ 2}\right)}$$

En posant :

$V$ la vitesse des points du sol,

$W_x$ la vitesse des points du sommet suivant son axe, et $\boxed{\tau = \frac{W_X - V}{V}}$, l'expression $X_K - X_N$ devient (équation 2) :

$$\boxed{X_K - X_N = (a - X_N)\frac{\tau}{1 + \tau}}$$

Par définition, r correspond au taux de glissement longitudinal.
Les composantes de la vitesse de glissement sont données par :

$$\begin{cases} Vg_X = \dfrac{d(X_K - X_N)}{dt} = W_X - V \\[2mm] Vg_Y = \dfrac{d(Y_K - Y_N)}{dt} = (\delta' - S_2 F_Y X_N) W_X \end{cases}$$

Dans la partie glissante de l'aire de contact, les efforts élémentaires sont générés par le frottement entre la gomme et le sol et la direction des efforts est colinéaire au vecteur cisaillement, ce qui se traduit par :

$$\frac{dF_X}{dF_Y} = r_K \frac{(X_K - X_N)}{(Y_K - Y_N)} \quad \text{avec} \quad r_K = \frac{K_X}{K_Y} \, .$$

En notant $\beta = \delta' - \frac{1}{2} S_2 F_Y (a + X_N) \, ,$ il vient :

$$\frac{d\dot{F}_X}{dF_Y} = r_K \frac{\tau}{(1 + \tau)\beta} \, .$$

Les efforts élémentaires dans la zone de frottement s'écrivent :

$$dF_X = \frac{r_K \tau}{\sqrt{(r_K \tau)^2 + (1+\tau)^2 \beta^2}} \mu(p, Vg, T) p \, dS$$

$$dF_Y = \frac{(1+\tau)\beta}{\sqrt{(r_K \tau)^2 + (1+\tau)^2 \beta^2}} \mu(p, Vg, T) p \, dS$$

L'abscisse b du point N à partir duquel est supposé se produire le glissement du pneu sur le sol correspond à l'équilibre entre les efforts élémentaires de cisaillement et d'adhérence, cet équilibre étant représenté par l'équation 3 :

$$[K_X(X_K - X_N)]^2 + [K_Y(Y_K - Y_N)]^2 = [\mu_0 p]^2$$

où $\mu_0$ est le coefficient d'adhérence statique exprimé au point d'abscisse b.

Bien qu'il puisse a priori exister dans l'aire de contact plusieurs points de transition entre une zone d'adhérence et une zone glissante, le modèle mécanique utilisé dans le mode de réalisation préféré de l'invention fait avantageusement l'hypothèse de l'unicité de ce point de transition. En d'autres termes, dès qu'apparaît un glissement dans l'aire de contact, ce glissement est supposé perdurer jusqu'à la sortie de cette aire de contact.

Les équations représentatives du bilan des efforts sous réserve de cette hypothèse d'unicité du point de passage sont données ci-après.

Il est toutefois possible d'en donner une version plus générale, correspondant au cas où plusieurs points de passage existeraient dans l'aire de contact.

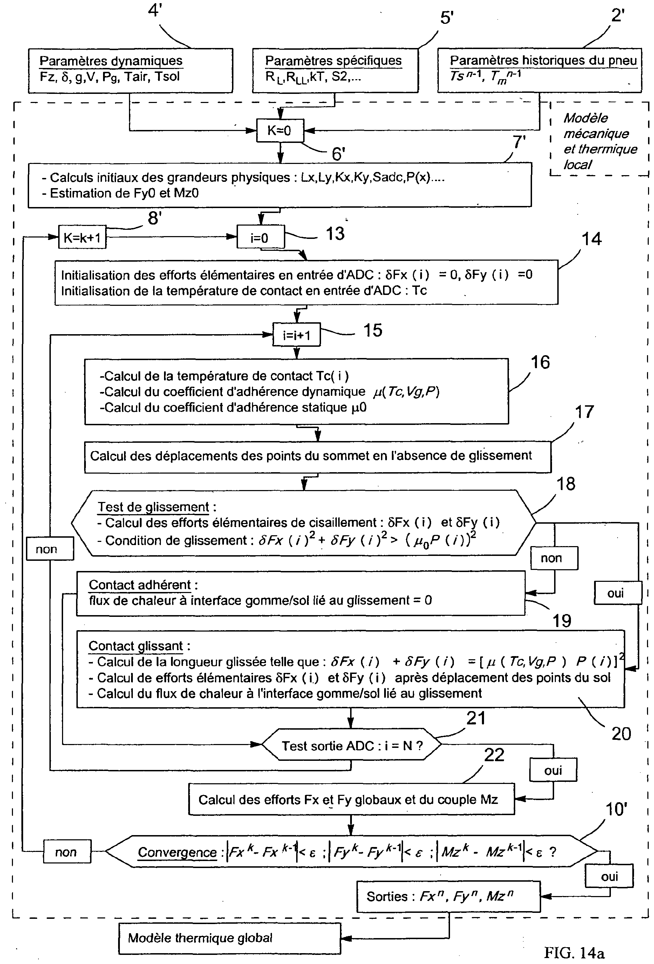

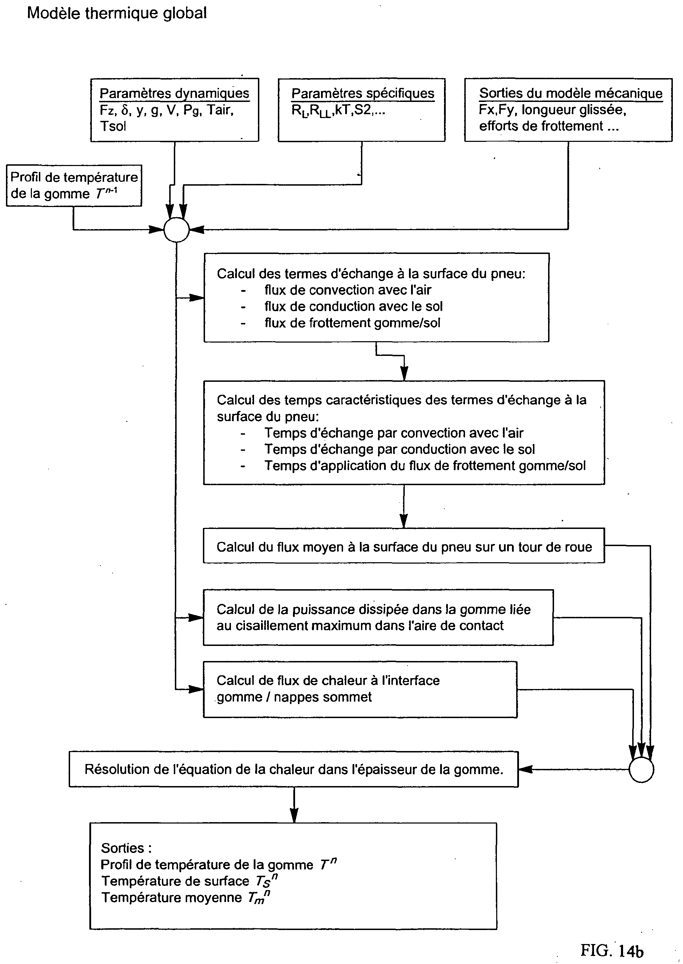

En outre, le mode de réalisation illustré aux figures 14a et 14b, qui utilise une discrétisation de la bande de roulement dans l'aire de contact et qui sera discuté ultérieurement, ne fait aucune hypothèse a priori sur le nombre de points de passage dans l'aire de contact.

Les efforts appliqués au centre de la roue équipée du pneu considéré sont obtenus en intégrant les efforts élémentaires se développant à la surface de l'aire de contact :

$$F_X = \int_{-Ly/2}^{Ly/2} \int_{b}^{a} K_X(X_K - X_N) \, dS + \int_{-Ly/2}^{Ly/2} \int_{-a}^{b} \frac{r_K \tau}{\sqrt{(r_K \tau)^2 + (1+\tau)^2 \beta^2}} \mu(p, Vg, T) p \, dS$$

$$F_Y = \int_{-Ly/2}^{Ly/2} \int_{b}^{a} K_Y(Y_K - Y_N) \, dS + \int_{-Ly/2}^{Ly/2} \int_{-a}^{b} \frac{(1+\tau)\beta}{\sqrt{(r_K \tau)^2 + (1+\tau)^2 \beta^2}} \mu(p, Vg, T) p \, dS$$

L'intégration conduit respectivement aux équations 4 et 5 suivantes :

$$F_X = K_X Ly \left[ \frac{1}{2} \frac{\tau}{1+\tau} (a-b)^2 \right] + Ly \, ent \int_{-a}^{b} \frac{r_K \tau}{\sqrt{(r_K \tau)^2 + (1+\tau)^2 \beta^2}} \mu(p, Vg, T) p \, dx$$

$$F_Y = K_Y Ly \left[ \frac{1}{2} \delta'(a-b)^2 - \frac{S_2 F_Y}{6}(2a^3 - 3a^2 b + b^3) \right] + Ly \, ent \int_{-a}^{b} \frac{(1+\tau)\beta}{\sqrt{(r_K \tau)^2 + (1+\tau)^2 \beta^2}} \mu(p, Vg, T) p \, dx$$

Le couple d'auto-alignement $M_Z$ a deux contributions, à savoir un moment $N_Y$ lié à l'effort $F_Y$ dont le centre de poussée est décalé par rapport au centre de l'aire de contact, et un couple $N_X$ lié à la distribution des efforts $F_X$ dans la largeur de l'aire de contact. En général, le couple $N_X$ est un couple de rappel, sauf dans des cas particuliers de fort couple moteur.

Dans le même cadre d'hypothèses que précédemment, le moment $N_Y$ peut être calculé directement par l'équation 6 :

$$N_Y = K_Y Ly \left[ \frac{1}{6} \delta' \left( a^3 - 3ab^2 + 2b^3 \right) - \frac{S_2 F_Y}{8} \left( a^2 - b^2 \right)^2 \right] + Ly \, ent \int_{-a}^{b} \frac{(1+\tau)\beta}{\sqrt{(r_K \tau)^2 + (1+\tau)^2 \beta^2}} \mu(p, Vg, T) px dx$$

Le couple $N_X$ est engendré par une distribution non uniforme des efforts $F_X$ dans la largeur de l'aire de contact, qui tend à s'amplifier lors de la mise en trapèze de l'aire de contact sous l'effet du déport ou du carrossage. Dans une approche de modélisation à une seule bande de relief du pneu, la distribution des efforts $F_X$ dans la largeur de l'aire de contact n'est pas directement accessible. Ainsi, le couple Nx est modélisé par une relation ad hoc dont une formulation mathématique est donnée ci-après à titre indicatif en fonction du moment $N_Y$ et du carrossage (équation 7) :

$$Nx = \beta_1 (Fz) Ny + \beta_2 (Fz, \delta) \gamma$$

Un exemple de modèles thermiques local et global est donné ci-après.

Le modèle thermique local prend essentiellement en compte les phénomènes thermiques liés au contact de la bande de roulement avec le sol dans l'aire de contact et au glissement relatif de la bande de roulement dans une partie de l'aire de contact.

Le modèle thermique global prend en compte l'ensemble des phénomènes d'échauffement et des échanges thermiques du pneu sur au moins un tour de roue.

La formulation des efforts globaux du pneumatique est basée sur une décomposition en effort de cisaillement de la bande de roulement et en effort de frottement. L'effort de frottement est fonction du coefficient d'adhérence $\mu$ entre la gomme et le sol, ce coefficient dépendant de la pression, de la vitesse de glissement et de la température de contact.

La température de contact dans l'aire de contact est modélisée de la façon suivante (modèle thermique local).

Lors du passage de la gomme dans l'aire de contact, la température de contact évolue en fonction de la conduction thermique et du frottement entre la gomme et le sol. La température dans le contact peut être calculée de différentes manières connues de l'homme de l'art, par exemple à l'aide de méthodes de discrétisation par différences finies.

Le procédé décrit ci-après optimise le temps de calcul tout en conduisant à une précision largement suffisante.

En faisant l'hypothèse de deux matériaux semi-infinis avec une température homogène *(Ts* pour la gomme et *Tsol* pour le sol), la température de surface, lorsque les deux massifs sont brusquement mis en contact parfait, s'écrit :

$$T_0 = \frac{T_S e_g + T_{sol} e_{sol}}{e_g + e_{sol}} \, ,$$

où $e_g$ et $e_{sol}$ sont respectivement l'effusivité de la gomme et du sol.

Lorsqu'il y a glissement entre la gomme et le sol, le flux de frottement $\varphi_F$ génère une élévation de température de surface, qui lorsque le flux est constant, s'exprime par :

$$Tc(t) = T_0 + 2\frac{\alpha}{e_g} \varphi_F \sqrt{\frac{t}{\pi}} \, ,$$

où *a* est le coefficient de partage qui détermine la proportion de flux qui pénètre dans la gomme. Dans le cas d'un contact parfait, ce coefficient s'exprime par :

$$\alpha = \frac{e_g}{e_g + e_{sol}} \ .$$

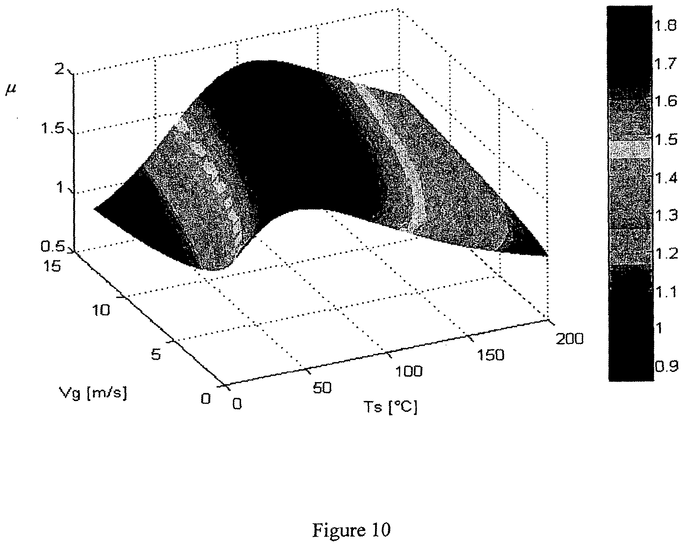

Pour la loi d'adhérence gomme sol, dont la figure 10 illustre la dépendance vis-à-vis des paramètres *Vg,* et *Tc,* plusieurs formulations mathématiques évidentes pour l'homme de l'art permettent de reproduire l'évolution avec la température, vitesse et pression à partir d'expérimentations spécifiques.

A titre d'exemple, on peut utiliser la formule :

$$\mu(T_C, Vg, P_c) = \left(e_1 . P_c^{e_2} + e_3\right)\left[\mu_1 + \left(\mu_2 - \mu_1\right)\exp\left(- a^2 \log^2\left(\frac{Tc}{T_1}\right)\right)\right]$$

avec $T_1 = T_0 + a_2\log_{10}(Vg/V_0)/[a_1 - \log_{10}(Vg/V_0)]$, où $\mu_1, \mu_2 T_0, a, a_1, a_2, e_1, e_2, e_3, V_0$ sont des constantes du modèle

Comme le montre la figure 10, le coefficient d'adhérence $\mu$ a une évolution complexe avec la température et la vitesse de glissement : aux faibles températures, ce coefficient augmente avec la température; aux fortes températures, c'est l'inverse. Le coefficient $\mu$ passe donc par un maximum avec la température. Ce maximum est différent selon la valeur de la vitesse de glissement. Plus la vitesse de glissement est élevée, plus le maximum de ce coefficient est obtenu à des températures élevées.

Le modèle thermique global calcule le profil de température dans l'épaisseur de la gomme en moyenne par tour de roue et dans la largeur de la bande de roulement. Ce modèle permet d'obtenir la température Ti de l'intérieur de la bande de roulement, qui détermine la rigidité G*(Ti), ainsi que la température de surface (ou périphérique) Ts de la bande de roulement en entrée d'aire de contact, qui est utilisée pour le calcul thermique dans l'aire de contact (modèle local).

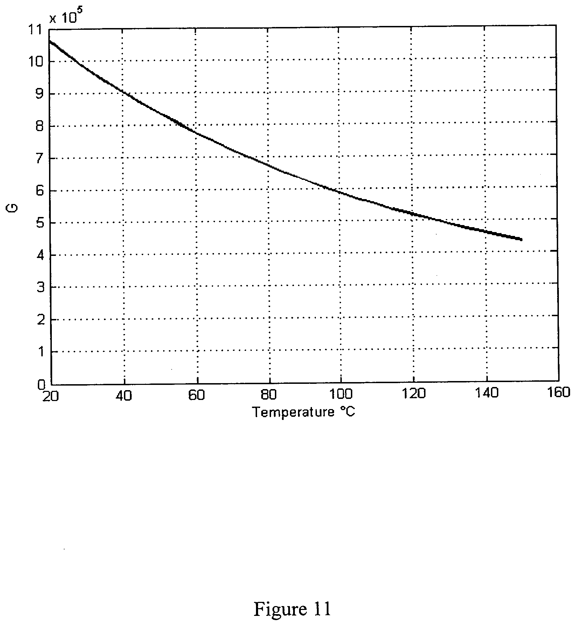

Un exemple de loi liant la rigidité à la température est illustré à la figure 11. En fait, cette loi est propre à chaque matériau utilisé et dépend de la formulation des mélanges constitutifs de la gomme du pneu. D'une manière générale, lorsque la température du mélange augmente, sa rigidité diminue.

Le modèle thermique global prend en compte les mécanismes suivants :

- la conduction dans la gomme;
- l'échauffement par le frottement entre la gomme et le sol;
- l'échauffement lié aux pertes dans la gomme; et
- le refroidissement par conduction avec le sol et convection avec l'air.

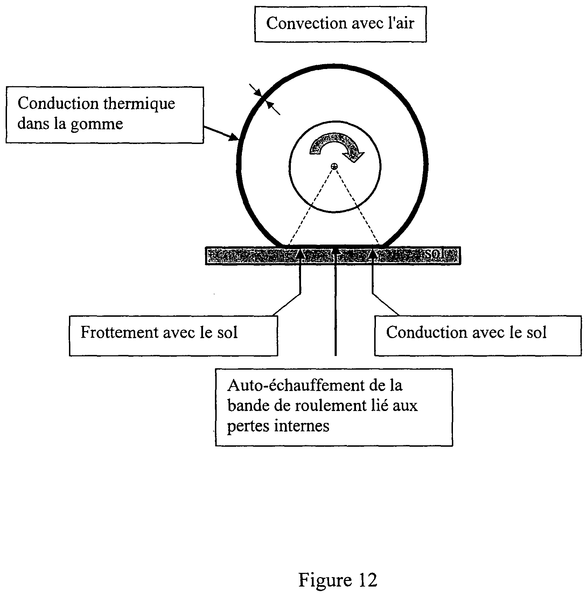

La figure 12 rappelle de façon schématique l'ensemble de ces mécanismes.

En faisant l'hypothèse d'une homogénéité de température dans la largeur de la bande de roulement et sur un tour de roue, il est possible d'obtenir l'équation unidimensionnelle de la chaleur dans le système de coordonnées polaires liée à la roue :

$$\frac{\partial T}{\partial t} = \frac{\lambda}{\rho c_p}\frac{\partial^2 T}{\partial x^2} + \frac{\dot{q}}{\rho c_p} \ ,$$

où

$T$ représente le profil de température dans l'épaisseur de la bande de roulement [°K];
$\lambda$ est la conductivité thermique de la gomme [W/m/°K];
$\rho$ *est* la masse volumique [kg/m$^3$];
$c_p$ est la chaleur massique de la gomme [J/kg/°K];
q est le terme de production de chaleur due aux pertes dans la gomme en [W/m$^3$] ;
x représente la direction radiale (i.e. dans l'épaisseur de la bande de roulement);

Effusivité : $e = \sqrt{\lambda \rho c_p}$

Diffusivité :
$$a = \frac{\lambda}{\rho c_p} = \frac{\lambda^2}{e^2} \quad [\mathrm{m}^2/\mathrm{s}]$$

Les conditions aux limites sont cependant différentes selon qu'on considère la surface extérieure du pneu ou l'interface entre la bande de roulement et les nappes du sommet du pneu.

Dans le premier cas, la surface du pneu voit ses conditions aux limites changer sur un tour de roue : hors de l'aire de contact, il existe un flux de surface due à la convection avec l'air environnant; dans l'aire de contact, il y a un flux de surface lié à la conduction avec le sol et au frottement entre la gomme et le sol. A l'interface gomme/(sol+air), la condition aux limites de flux imposé à la surface du pneu peut s'écrire d'une manière formelle comme suit :

$$-\lambda \frac{\partial T}{\partial x} = \varphi \quad [\mathrm{W}/\mathrm{m}^2]$$

où $\varphi$ est un flux de surface qui reste à expliciter.

Les échanges par rayonnement thermique peuvent être négligés.

En revanche, au niveau de l'interface entre la bande de roulement et les nappes du sommet du pneu, l'hypothèse d'un flux nul peut être faite (condition adiabatique).

Le calcul du terme $\dot{q}$ [W/m3] de production de chaleur due aux pertes dans la gomme peut être réalisé de la façon suivante.

Lorsque la gomme passe dans l'aire de contact, elle subit des déformations par compression et cisaillement qui sont source de chaleur. La puissance interne dissipée dans la gomme sur un tour de roue est calculée comme le produit, par la fonction pertes P, de l'énergie fournie lors du passage dans l'aire de contact Wf et de la fréquence de tour de roue :

$$\dot{q} = P W_f f$$

La densité d'énergie de déformation élastique subie par la gomme dans l'aire de contact est explicitée en fonction des efforts longitudinaux, transversaux et de la charge du pneu, ce qui permet d'obtenir la formulation finale :

$$\dot{q} = P(W_f, T) \frac{1}{2G^*} \frac{V}{2\pi R_0} \frac{F_X^{\,2} + F_Y^{\,2} + F_Z^{\,2}/3}{S_{ADC}^{\,2}}$$

où $P(W_f, T)$ est la fonction pertes, qui prend en compte le point de fonctionnement de la gomme en température et en amplitude de sollicitation et qui peut être caractérisée par expérimentation spécifique.

La température T correspond à la température caractéristique du mélange et détermine entre autres le niveau de pertes et de module. Sachant que les lois pertes et module sont par exemple mesurées à une fréquence de 10Hz, la température T est en fait une température équivalente au sens de la loi WLF, afin d'avoir une estimation des pertes et module pour des fréquences de sollicitation différentes :

$$T = T_i + C_2 \log_{10}(f/10)/[C_1 - \log_{10}(f/10)],$$

où $T_i$ est la température interne du mélange issue du calcul thermique global, et où $f = V/(2\pi R_0)$ est la fréquence de rotation.

Comme le comprendra aisément l'homme du métier à la lecture de la présente description, la même relation est utilisée pour relier le module de cisaillement de la gomme à la température interne Ti, ceci afin de prendre en compte les mécanismes de rigidification du mélange lorsque la fréquence du tour de roue augmente.

Pour le calcul du flux de conduction avec le sol, la bande de roulement et le sol peuvent être assimilés à deux murs semi-infinis mis en contact pendant l'intervalle de temps $t_{adc}$. En supposant le contact parfait, le flux de conduction s'écrit :

$$\varphi_{cond} = -2 \frac{e_g e_{sol}}{e_g + e_{sol}} \frac{1}{\sqrt{t_{adc} \pi}} \left( Ts - T_{sol} \right)$$

où Ts est la température de surface de la gomme.

Le calcul du flux de convection avec l'air est rendu plus difficile par le fait que l'échange thermique avec l'air dépend fortement de la nature de l'écoulement d'air autour du pneu. D'une manière générale, la modélisation des échanges convectifs est basée sur des formulations semi-empiriques. Dans le cas particulier du pneumatique, la formule suivante peut être utilisée :

$$\varphi_{conv} = C_{air} 4.126 \left(2R_0\right)^{-0.2} V^{0.805} \left( Ts - T_{air} \right)$$

où $C_{air}$ est une constante qui prend en compte l'effet de la convection forcée.

Le calcul du flux de frottement doit rendre compte du fait que le frottement constitué par le glissement de la gomme sur le sol est source de production de chaleur. En toute rigueur, la dissipation d'énergie se fait dans le massif de gomme sur des épaisseurs inférieures au millimètre. Dans le cas d'un contact sec, l'approximation peut être faite que l'énergie est dissipée en extrême surface et qu'elle est modélisée par un flux de frottement. Le flux de frottement moyen dans la zone de glissement de l'aire de contact s'écrit comme suit :

$$\varphi_{frot} = \alpha \frac{V_g F_\mu}{(1 - ppa) LxLy \, ent}$$

où $a$ est un coefficient de partage de flux entre la gomme et le sol; une valeur $\alpha = 1$ signifie que la totalité du flux de frottement est orienté vers la gomme; une valeur $\alpha = 0$ signifie que la totalité du flux de frottement est orienté vers le sol;

$F_\mu$ est la composante de l'effort induit par le frottement entre la gomme et le sol; $Vg$ est la vitesse de glissement; et $ppa$ est la proportion de points adhérents dans l'aire de contact.

Le flux thermique moyen à la surface de la bande de roulement est défini comme la moyenne des différents flux, pondérée par la durée caractéristique pendant laquelle ces flux sont effectifs lors d'un tour de roue, ce que traduit la relation :

$$\varphi = \frac{\varphi_{frot} \left(1 - ppa\right) t_{adc} + \varphi_{cond} t_{adc} + \varphi_{conv} t_{Hadc}}{t_{adc} + t_{Hadc}}$$

où $t_{adc}$ correspond à la durée de passage d'un élément de la bande de roulement dans l'aire de contact; où $t_{Hadc}$ est la durée de passage d'un élément de la bande de roulement hors de l'aire de contact; et où $(1-ppa)\, t_{adc}$ est la durée pendant laquelle un élément de la bande de roulement glisse dans l'aire de contact.

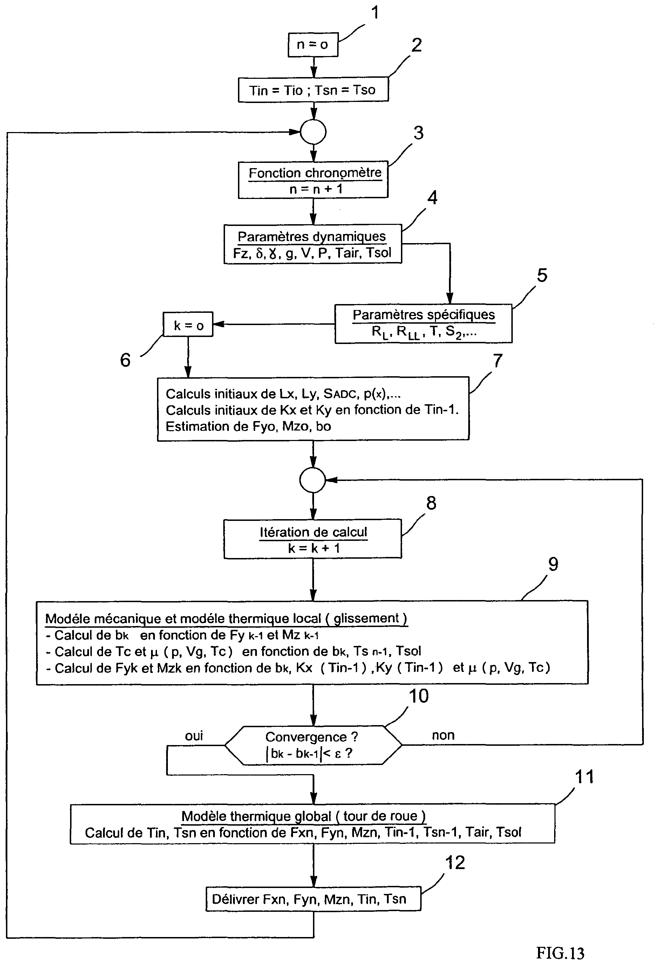

La figure 13 illustre de façon globale la mise en oeuvre opérationnelle d'un procédé conforme au mode de réalisation préféré de l'invention.

En amont de sa mise en oeuvre opérationnelle, ce procédé comprend une phase préliminaire de modélisation au cours de laquelle sont établis le modèle mécanique ou premier modèle, le modèle thermique local ou deuxième modèle, et le modèle thermique global tour de roue, ou troisième modèle.

Chaque modèle est établi par application de lois physiques connues et / ou construites par expérimentation spécifique, et prend la forme d'un système d'équations telles que celles présentées ci-dessus pour chaque modèle.

Pour rappel, le modèle mécanique fournit les expressions des efforts longitudinaux et des efforts transversaux qui sont transmis par le pneu entre le sol et le véhicule, du couple d'auto-alignement qui est lié à l'intensité de ces efforts et à leur distribution dans l'aire de contact, et de l'équilibre des forces élémentaires de cisaillement et de glissement du pneu au point N, supposé unique dans le mode de réalisation préféré de l'invention, de passage entre les zones de contact adhérent et glissant, ces expressions étant données en fonction des paramètres dynamiques qui sont liés aux conditions physiques de roulement et d'utilisation du pneu, des paramètres physiques spécifiques du pneu, et de l'abscisse b du point de passage.

Le modèle thermique local fournit l'expression des variations de la température de contact de la bande de roulement avec le sol depuis l'entrée jusqu'à la sortie de l'aire de contact, ces variations dépendant notamment de la température périphérique de la bande de roulement, de la température du sol, et du glissement de la bande de roulement sur le sol.

Le modèle thermique global fournit le profil de température dans l'épaisseur de la bande de roulement et les variations, sur une période de tour de roue, de la température périphérique de la bande de roulement et de la température interne du pneu, en fonction notamment des valeurs antérieurement connues ou estimées des températures périphérique et interne, du coefficient de conduction thermique de la bande de roulement, et de phénomènes à composante thermodynamique tels que les déformations internes subies par le pneu, les échanges thermiques entre le pneu et son environnement, et le glissement de la bande de roulement sur le sol.

Par ailleurs, le modèle mécanique prend en compte le coefficient d'adhérence et le module de cisaillement sous forme de variables respectivement fonctions de la température périphérique et de la température interne.

La phase d'exploitation du procédé, qui s'appuie sur les résultats de la phase de modélisation, comprend des opérations d'affectation de valeurs numériques et des opérations de résolution.

Les opérations d'affectation consistent essentiellement à attribuer des valeurs numériques aux paramètres dynamiques et aux paramètres spécifiques, tandis que les opérations de résolution consistent essentiellement à déduire, en utilisant notamment le modèle mécanique et les valeurs attribuées aux paramètres dynamiques et aux paramètres physiques spécifiques, les valeurs des efforts longitudinaux Fx, des efforts transversaux Fy, et du couple d'auto-alignement Mz.

La valeur de la température périphérique Ts, qui est obtenue par des opérations de résolution afférentes au modèle thermique global, est utilisée par des opérations de résolution afférentes au modèle thermique local pour prendre en compte la dépendance en température du coefficient d'adhérence.

D'autre part, la valeur de la température interne Ti, qui est également obtenue par des opérations de résolution afférentes au modèle thermique global, est utilisée par des opérations de résolution afférentes au modèle mécanique pour prendre en compte la dépendance en température du module de cisaillement de la gomme du pneu.

Le modèle mécanique inclut de préférence des équations liées aux conditions d'équilibre des forces élémentaires de cisaillement et de glissement de la bande de roulement dans l'aire de contact, et sur la base desquelles s'effectue le couplage entre le modèle mécanique et le modèle thermique local.

En pratique, le procédé de l'invention comprend avantageusement une phase itérative de calcul constituée d'une succession de cycles de calcul, chaque cycle de calcul comprenant au moins une opération de résolution afférente au modèle mécanique et une opération de résolution afférente au modèle thermique local.

La phase d'exploitation du procédé, qui fait suite à la phase de modélisation et qui est illustrée à la figure 13 pour le mode de réalisation préféré de l'invention, comprend d'abord une opération 1 consistant à initialiser un indice compteur n utilisé pour la mesure du temps.

A l'opération 2, des valeurs initiales Tso et Tio sont attribuées à la température périphérique de la bande de roulement et à la température interne du pneu, par exemple en faisant l'hypothèse que le pneu est initialement en équilibre thermique avec l'air ambiant.

L'opération 3 incrémente le temps compté par le chronomètre d'un intervalle de temps correspondant au moins à celui qui est nécessaire pour la réalisation des calculs ultérieurs tels que décrits ci-après.

Des valeurs préalablement mesurées ou mémorisées sont ensuite attribuées aux paramètres dynamiques (opération 4) et aux paramètres spécifiques (opération 5).

L'opération 6 consiste à initialiser un indice compteur k utilisé pour compter le nombre de cycles de calcul successifs effectués à l'intérieur d'une boucle d'itération qui sera décrite ci-après.

L'opération 7 constitue une phase préparatoire destinée notamment à permettre le calcul de grandeurs contingentes dont la valeur peut être considérée comme constante pour les différents cycles de calcul d'une même boucle d'itération, ce qui permet d'éviter l'exécution répétée de ces calculs à chaque cycle de calcul d'une même boucle d'itération.

En particulier, la phase préparatoire 7 est utilisée pour calculer les dimensions Lx et Ly de l'aire de contact, sa surface $S_{ADC}$, le profil de pression p(x) le long de l'aire de contact, de même que les rigidités Kx et Ky de la bande de roulement en fonction de la température interne Ti à l'instant antérieur n-1, c'est-à-dire Tin-1.

Des valeurs estimées Fyo, Mzo et bo sont par ailleurs attribuées aux efforts latéraux Fy, au couple d'auto-alignement Mz, et à l'abscisse b du point N de passage entre la zone de contact adhérent et la zone de contact glissant.

Lorsque les paramètres d'entrée varient peu en fonction du temps, les valeurs estimées Fyo, Mzo et bo peuvent être constituées par les valeurs calculées à l'instant précédent.

Dans le cas contraire, l'abscisse bo de début de glissement est déterminée en supposant que le profil de pression dans la longueur de l'aire de contact est parabolique et en négligeant la rigidité de torsion et la rigidité du sommet.

Dans ce cas, l'équation de glissement (équation 3) a une solution analytique :

$$b_0 = a\left(\frac{4}{3}\frac{a^2}{\mu_0 F_Z / Ly}\sqrt{\left[K_X \frac{\tau}{1+\tau}\right]^2 + \left[K_Y(\delta + \alpha_1)\right]^2} - 1\right)$$

Connaissant $b_0$, l'effort $F_{y0}$ et le couple $M_{Z0}$ sont alors calculés à partir des équations 5 à 7.

Il faut en outre vérifier que la position initiale obtenue pour le point de passage satisfait la contrainte sur le signe du cisaillement latéral de la bande de roulement, à savoir $(Y_K - Y_N)\delta$'>0. Si tel n'est pas le cas, la solution envisagée n'a pas de sens physique. Il faut alors imposer : $Y_K - Y_N = 0$, et la valeur initiale $M_{Z0}$ du couple d'auto-alignement est fixée à 0.

L'opération 8 incrémente l'indice compteur k et permet d'aborder un premier ou un nouveau cycle de calcul (étapes 9 et 10) de la phase itérative.

Cette phase itérative permet de résoudre par approximations successives, et à partir des valeurs antérieurement connues ou estimées de l'abscisse b du point de passage, des efforts transversaux Fy, et du couple d'auto-alignement Mz, de nouvelles valeurs de ces grandeurs b, Fy et Mz qui résolvent les équations 1 à 7 précédemment présentées, pour les valeurs attribuées aux paramètres dynamiques et aux paramètres spécifiques.

Ces équations sont formulées en faisant apparaître l'abscisse b du point de passage entre la zone de contact adhérent et la zone de contact glissant, les efforts dans l'aire de contact étant décomposés en deux contributions, à savoir un effort de cisaillement qui dépend des rigidités de la gomme, du sommet et de la carcasse du pneu, et un effort de frottement qui dépend de la loi de frottement.

L'abscisse b est calculée à partir des équations 1 à 3 et des valeurs de Fy et Mz estimées à l'itération précédente. Il s'agit d'une équation scalaire, dont la solution est bornée ($-a \le b \le a$). Le calcul de l'abscisse b est par exemple réalisé par combinaison d'une bissection et d'une sécante.

Si le déplacement proposé par la méthode sécante sort des bornes inférieures et extérieures, le procédé bascule sur un pas de bissection.

Plusieurs solutions de l'abscisse b étant a priori possibles, la solution retenue est celle qui satisfait la condition $(Y_K - Y_N)\delta$' > 0.

Les intégrales $\displaystyle\int_{-a}^{b}\mu(P(x),T,Vg)P(x)\,dx$ et $\displaystyle\int_{-a}^{b}\mu(P(x),T,Vg)P(x)x\,dx$ liées au frottement sur le sol de la gomme de la bande de roulement sont par exemple calculées en utilisant les formules de quadrature de Gauss.

Pour le calcul des résidus du système constitué par les équations 4, 5, et 6+7, et le calcul de la convergence, il s'agit de résoudre le système non linéaire de n équations en n inconnues noté de manière formelle : $F(x) = 0$.

Bien que plusieurs procédés itératifs soient possibles, le procédé optimal semble être constitué par le procédé itératif mixte de type Newton-Raphson/Broyden connu de l'homme de l'art.

A chaque cycle de calcul d'ordre k, l'étape 9 comprend notamment une opération consistant à calculer une nouvelle valeur provisoire $b_k$ de l'abscisse du point de passage à partir des équations 1 à 3 d'équilibre des forces élémentaires et des valeurs antérieurement connues ou estimées $F_{Yk-1}$ et $M_{Zk-1}$ des efforts transversaux et du couple d'auto-alignement.

Dans le mode de réalisation préféré, dans lequel le modèle mécanique est enrichi par le modèle thermique local et prend notamment en compte l'influence de l'évolution de la température de contact sur la valeur du coefficient de frottement de la gomme du pneu sur le sol, l'étape 9 comprend également, pour chaque point de la zone de contact glissant, le calcul de la température de contact Tc et du coefficient de frottement en fonction de la valeur provisoire nouvellement calculée $b_k$ de l'abscisse du point de passage, de la température périphérique $T_{sn-1}$ telle que connue à l'instant précédent, et de la température du sol $T_{sol}$, la température périphérique $T_{sn-1}$ du pneu étant utilisée pour le calcul de la température de contact en entrée de la surface de contact.

Enfin, l'étape 9 comprend l'opération qui consiste à calculer, à partir de la nouvelle valeur provisoire $b_k$ de l'abscisse du point de passage, des valeurs des rigidités Kx et Ky de la bande de roulement pour la température interne Tin-1 telle qu'elle est connue à l'instant antérieur, de la valeur du coefficient de frottement $\mu$, et des équations 1 à 7, de nouvelles valeurs $F_{Yk}$ et $M_{Zk}$ des efforts transversaux et du couple d'auto-alignement, utilisables pour un éventuel cycle de calcul ultérieur.

L'étape 10 consiste à tester la convergence de la phase itérative.

Par exemple, si les écarts respectifs entre d'une part les nouvelles valeurs $b_k$, $F_{Yk}$ et $M_{Zk}$ et d'autre part les valeurs provisoires $b_{k-1}$, $F_{Yk-1}$ et $M_{Zk-1}$ issues du cycle de calcul précédent sont inférieurs à des limites respectives telles que $\varepsilon$, alors la phase itérative est interrompue. Dans le cas contraire, cette phase itérative est poursuivie par rebouclage en amont de l'opération 8.

A l'interruption de la phase itérative, le modèle thermique global tour de roue est utilisé (étape 11) pour calculer les nouvelles valeurs à jour $T_{sn}$ et $T_{in}$ des températures périphérique et interne en tenant compte des évolutions subies par ces températures, depuis la fin de la phase itérative précédente, sous l'effet de l'ensemble des phénomènes à composante thermodynamique, tels que les déformations internes subies par le pneu, les échanges thermiques entre le pneu et son environnement (air, sol), et le glissement de la bande de roulement sur le sol.

On rappelle que la température Ts est la température de surface moyenne, à la fois dans la largeur et dans la circonférence du pneu, de la bande de roulement, et que le calcul des températures Ti et Ts s'appuie sur une modélisation unidirectionnelle dans l'épaisseur de la bande de roulement.

Les équations du modèle thermique global sont résolues par une approche classique de méthode par différences finies en utilisant un maillage spatial dans l'épaisseur de la gomme et une méthode de résolution dans le temps de type Runge-Kutta d'ordre 2.

L'opération 12, mise en oeuvre à la sortie de la phase itérative, consiste à délivrer, pour l'instant n, les valeurs des efforts longitudinaux et transversaux Fxn, Fyn, du couple d'auto-alignement Mzn, de la température interne Tin du pneu, et de la température périphérique Tsn de la bande de roulement.

Le procédé est alors rebouclé juste en amont de l'opération 3 d'incrémentation du chronomètre, et avant l'opération 4 de mise à jour des paramètres dynamiques qui permet de tenir compte des évolutions subies par ces paramètres pendant le temps d'exécution de la phase itérative qui vient de se terminer.

La nouvelle valeur Tin de la température interne du pneu sera utilisée pour l'opération 5 de mise à jour des paramètres spécifiques, ou au cours de la phase préparatoire 7, pour en déduire la nouvelle valeur de la rigidité G* du mélange constitutif de la gomme du pneu, qui conditionne les valeurs des rigidités Kx et Ky.

Par ailleurs, la nouvelle valeur Tsn de la température périphérique de la bande de roulement sera utilisée lors de l'étape 9 pour le calcul de la température de contact Tc en entrée de la bande de roulement.

On comprend donc que le couplage entre le processus de détermination des efforts et le processus de détermination des températures intervient à deux niveaux, à savoir d'une part par la prise en compte du fait que la température moyenne Ti de la bande de roulement influe sur la rigidité G* du mélange et donc sur les rigidités Kx et Ky de la bande de roulement, et d'autre part par la prise en compte du fait que la température périphérique Ts de la bande de roulement dans l'aire de contact influe sur le coefficient d'adhérence entre la gomme et le sol.

Le procédé de simulation qui vient d'être décrit est notamment applicable à la simulation en temps réel du comportement dynamique d'un véhicule doté d'un châssis et de plusieurs pneus en situation de roulement sur le sol.

Ce procédé peut alors par exemple être mis en oeuvre sur un ordinateur portable ayant les caractéristiques suivantes : PC Windows XP, Pentium 4 3.6Ghz, 2Go de mémoire ; les performances du procédé de simulation d'un pneu seul en situation de roulage dérive et en présence de glissement sont de 9000 calculs complets à la seconde, où chaque calcul correspond à la détermination des efforts longitudinaux et transversaux, du couple d'auto-alignement et des températures de surface et interne du pneu à un instant donné en fonction des paramètres dynamiques et spécifiques.

Dans les applications véhicule, chacun des modèles mécanique, thermique local et thermique global, ou au moins le premier d'entre eux, est exploité pour chaque pneu et associé à un modèle dynamique de châssis.

Chacun des modèles de pneu coopère avec ce modèle de châssis d'une part pour recevoir du modèle de châssis les valeurs des paramètres dynamiques ou de certains d'entre eux au moins, et d'autre part pour permettre au modèle de châssis d'exploiter, pour chaque pneu, les valeurs des efforts longitudinaux, des efforts transversaux, et du couple d'auto-alignement obtenues par la mise en oeuvre des modèles de pneu.

Les figures 14a et 14b illustrent, pour un intervalle de temps n déterminé, la phase d'exploitation d'un autre mode de réalisation du procédé de l'invention qui, bien que beaucoup moins économique que le précédent en calculs, offre lui aussi une grande fidélité de simulation.

Dans ce mode de réalisation, l'aire de contact est discrétisée par exemple sur N zones successives de sa longueur et l'équilibre des forces élémentaires de cisaillement et de glissement de la bande de roulement dans l'aire de contact (ADC) est examiné sur chaque élément de surface.

Plus précisément, chaque cycle de chaque phase itérative comprend N opérations successives d'analyse des conditions d'équilibre des forces élémentaires de cisaillement et de glissement sur les N surfaces élémentaires respectives différentes de l'aire de contact, et chaque cycle de la phase itérative est interrompu lorsque l'ensemble des surfaces élémentaires considérées lors de ce cycle recouvre l'aire de contact.

Les opérations 2', et 4' à 8' de ce mode de réalisation sont respectivement les mêmes que les opérations 2 et 4 à 8 du mode de réalisation préféré de la figure 13.

L'opération 13 consiste à initialiser un indice compteur i utilisé pour compter les opérations d'analyse des conditions d'équilibre des forces élémentaires sur les différentes surfaces élémentaires.

L'opération 14 constitue une phase préparatoire destinée à fixer à zéro les valeurs des efforts élémentaires transversaux et longitudinaux $\delta Fx(i)$ et $\delta Fy(i)$ s'exerçant en amont de la première surface élémentaire de l'aire de contact, et à fixer la valeur initiale de la température de contact Tc.

L'opération 15 incrémente l'indice compteur i et permet d'aborder l'analyse des efforts élémentaires dans une première ou une nouvelle surface élémentaire de l'aire de contact, les opérations 16 et 17 étant consacrées au calcul de ces efforts.

Le test 18 vise à déterminer si les efforts élémentaires de cisaillement de la bande de roulement sont ou non supérieurs à l'adhérence.

Dans la négative, l'opération 19 fixe à zéro l'échauffement qui aurait été lié au glissement de la bande de contact sur le sol.

En revanche, en cas de glissement, l'opération 20 détermine avec précision les conditions de glissement et calcule le flux de chaleur lié à ce glissement conformément au modèle thermique local.

Qu'il y ait ou non glissement, le test 21 est effectué pour déterminer si la surface élémentaire considérée est ou non la dernière des N surfaces élémentaires de la bande de roulement dans l'aire de contact discrétisée.

Dans la négative, la surface suivante est analysée après retour à l'opération 15.

Sinon, l'opération 22 est effectuée pour calculer les efforts longitudinaux et transversaux ainsi que le couple d'auto-alignement par sommation des efforts élémentaires et des couples élémentaires obtenus pour les différentes surfaces élémentaires.

Le test 10', qui est équivalent au test 10 de la figure 13, conduit soit à retourner à l'opération 8' pour poursuivre la phase itérative, soit à fournir les valeurs des efforts et du couple d'auto-alignement pour le cycle de calcul considéré et à mettre en oeuvre les opérations d'affectation et de résolution pour le modèle thermique global, telles que recensées de façon directement lisible sur la figure 14b.

**Revendications**

1. Procédé de simulation mise en oeuvre par ordinateur du comportement physique d'un pneu équipant un véhicule en situation de roulement sur le sol, avec lequel la bande de roulement du pneu présente une aire de contact incluant au moins une zone de contact adhérent et au moins une zone de contact glissant, ce procédé comprenant au moins des opérations de modélisation, des opérations d'affectation de valeurs numériques, et des opérations de résolution, les opérations de modélisation consistant au moins à établir, par application de lois physiques connues et / ou construites par expérimentation spécifique, et en tant que premier modèle, un modèle des efforts longitudinaux (Fx), des efforts transversaux (Fy), et d'un couple d'auto-alignement (Mz), transmis par le pneu entre le sol et le véhicule, en fonction de paramètres physiques spécifiques, incluant un coefficient d'adhérence et un module de cisaillement de la gomme du pneu, et en fonction de paramètres dynamiques liés aux conditions physiques de roulement et d'utilisation du pneu, le couple d'auto-alignement étant lié à l'intensité des efforts longitudinaux et transversaux et à leur distribution dans l'aire de contact, les opérations d'affectation consistant au moins à attribuer (4) des valeurs numériques aux paramètres dynamiques et aux paramètres spécifiques (5), et les opérations de résolution consistant au moins à déduire, en utilisant au moins le premier modèle et les valeurs attribuées aux paramètres dynamiques et aux paramètres physiques spécifiques, des valeurs des efforts longitudinaux (Fx), des efforts transversaux (Fy), et du couple d'auto-alignement (Mz), **caractérisé en ce que** les opérations de modélisation comprennent aussi l'établissement, en tant que second modèle, d'un modèle local d'échauffement exprimant des variations d'une température de contact de la bande de roulement avec le sol depuis l'entrée jusqu'à la sortie de l'aire de contact par suite du contact et du glissement de la bande de roulement avec le sol, et l'établissement, en tant que troisième modèle, d'un modèle global d'échauffement et de flux thermique, ce troisième modèle exprimant des variations, sur une période d'au moins un tour de roue, d'une température périphérique de la bande de roulement et d'une température interne du pneu en fonction de valeurs antérieurement connues ou estimées des températures périphérique et interne, d'un coefficient de conduction thermique de la bande de roulement, et de phénomènes à composante thermodynamique tels que déformations internes subies par le pneu, échanges thermiques entre le pneu et son environnement, et glissement de la bande de roulement sur le sol, **en ce qu'**au moins le coefficient d'adhérence et le module de cisaillement interviennent dans le premier modèle comme des variables respectivement fonctions de la température périphérique et de la température interne, **en ce que** la valeur de la température périphérique (Ts), obtenue par des opérations de résolution afférentes au troisième modèle, est utilisée par des opérations de résolution afférentes au deuxième modèle pour prendre en compte la dépendance en température du coefficient d'adhérence, et **en ce que** la valeur de la température interne (Ti), obtenue par des opérations de résolution afférentes au troisième modèle, est utilisée par des opérations de résolution afférentes au premier modèle pour prendre en compte la dépendance en température du module de cisaillement de la gomme du pneu.

2. Procédé de simulation suivant la revendication 1, **caractérisé en ce que** le premier modèle inclut des équations liées à des conditions d'équilibre des forces élémentaires de cisaillement et de glissement de la bande de roulement dans l'aire de contact, **en ce que** ce procédé comprend au moins une phase itérative de calcul constituée d'une succession de cycles de calcul, et **en ce que** chaque cycle de calcul comprend au moins une opération de résolution afférente au premier modèle et une opération de résolution afférente au deuxième modèle.

**3.** Procédé de simulation suivant la revendication 2, **caractérisé en ce que** l'aire de contact est discrétisée au moins dans une première de ses dimensions, **en ce que** chaque cycle de chaque phase itérative comprend une série d'opérations d'analyse des conditions d'équilibre des forces élémentaires de cisaillement et de glissement sur des surfaces élémentaires respectives différentes de l'aire de contact, distribuées le long de la première dimension de l'aire de contact, et **en ce que** chaque cycle de la phase itérative est interrompu lorsque l'ensemble des surfaces élémentaires considérées lors de ce cycle recouvre l'aire de contact.

**4.** Procédé de simulation suivant la revendication 2, **caractérisé en ce que** le premier modèle est établi en considérant que l'aire de contact comprend une unique zone de contact adhérent et une unique zone de contact glissant séparées l'une de l'autre par un point de passage, **en ce que** le premier modèle prend la forme d'un système d'équations exprimées au moins en fonction des paramètres dynamiques, des paramètres spécifiques, et de l'abscisse (b) du point de passage, **en ce que** chaque phase itérative est dédiée à des phénomènes apparaissant pendant un intervalle de temps élémentaire correspondant, et **en ce que** chaque phase itérative est mise en oeuvre pour résoudre, par approximations successives et au moins à partir de valeurs antérieurement connues ou estimées de l'abscisse ($b_o$) du point de passage, des efforts transversaux ($F_{yo}$), et du couple d'auto-alignement ($M_{zo}$), de nouvelles valeurs de l'abscisse (b) du point de passage, des efforts transversaux ($F_y$), et du couple d'auto-alignement ($M_z$) qui résolvent le système d'équations du premier modèle pour les valeurs attribuées aux paramètres dynamiques et aux paramètres spécifiques.

**5.** Procédé de simulation suivant la revendication 4, **caractérisé en ce que** chaque nouveau cycle de calcul de chaque phase itérative comprend les opérations (9) consistant au moins à :

   - calculer une nouvelle valeur provisoire de l'abscisse du point de passage à partir des équations d'équilibre des forces élémentaires et des valeurs antérieurement connues ou estimées des efforts transversaux et du couple d'auto-alignement;
   - calculer, à partir de la nouvelle valeur provisoire de l'abscisse du point de passage et des équations liant les efforts transversaux et le couple d'auto-alignement aux paramètres dynamiques, aux paramètres spécifiques, et à l'abscisse du point de passage, de nouvelles valeurs des efforts transversaux et du couple d'auto-alignement utilisables pour un éventuel cycle de calcul ultérieur;
   - interrompre conditionnellement (10) ladite phase itérative au moins lorsque l'écart entre la nouvelle valeur provisoire de l'abscisse du point de passage et la valeur antérieurement connue ou estimée de cette abscisse est inférieur à une limite de précision prédéterminée; et
   - à l'interruption de ladite phase itérative, affecter (12) aux efforts longitudinaux et transversaux et au couple d'auto-alignement, en tant que valeurs pour cette phase, les nouvelles valeurs des efforts longitudinaux et transversaux et du couple d'auto-alignement obtenues au dernier cycle de calcul.

**6.** Procédé de simulation suivant la revendication 4 ou 5, **caractérisé en ce qu'**il comprend en outre une opération mise en oeuvre après la fin de chaque phase itérative et consistant à mettre au moins à jour (4) les paramètres dynamiques pour tenir compte des évolutions subies par ces paramètres pendant le temps d'exécution de la phase itérative, et à engager une nouvelle phase itérative (8-10).

**7.** Procédé de simulation suivant l'une quelconque des revendications 1 à 6, **caractérisé en ce que** les opérations de résolution afférentes au troisième modèle sont effectuées en dehors de chaque phase itérative.

**8.** Procédé de simulation suivant l'une quelconque des revendications 1 à 7, **caractérisé en ce que** chaque phase itérative est précédée d'une phase préparatoire (7) au cours de laquelle sont calculées des grandeurs contingentes, incluant les dimensions de l'aire de contact, en fonction des valeurs attribuées aux paramètres dynamiques et aux paramètres spécifiques, chaque grandeur contingente étant exploitée dans ladite phase itérative avec une valeur qui lui a été attribuée lors de la phase préparatoire.

**9.** Application du procédé suivant l'une quelconque des revendications précédentes à la simulation du comportement dynamique d'un véhicule doté d'un châssis et de plusieurs pneus en situation de roulement sur le sol, application dans laquelle chacun des premier, deuxième et troisième modèles est exploité pour chaque pneu et associé à un modèle donné de dynamique de châssis, dans laquelle le modèle de châssis fournit auxdits modèles, pour chaque pneu, les valeurs de certains au moins des paramètres dynamiques, et dans laquelle le modèle de châssis exploite, pour chaque pneu, les valeurs des efforts longitudinaux, des efforts transversaux, et du couple d'auto-alignement obtenues par la mise en oeuvre desdits premier, deuxième et troisième modèles.

10. Application selon la revendication 9 du procédé suivant l'une quelconque des revendications 2, 4 à 8 à la simulation en temps réel du comportement dynamique d'un véhicule.

**Patentansprüche**

1. Computerimplementiertes Verfahren zur Simulation des physikalischen Verhaltens eines Reifens, mit dem ein Fahrzeug ausgerüstet ist, in einer Rollsituation auf dem Boden, wobei die Lauffläche des Reifens eine Kontaktfläche aufweist, die mindestens einen haftenden Kontaktbereich und mindestens einen gleitenden Kontaktbereich aufweist, wobei dieses Verfahren mindestens Vorgänge des Modellierens, Vorgänge des Zuweisens von numerischen Werten und Vorgänge des Lösens aufweist, wobei die Vorgänge des Modellierens darin bestehen, durch Anwendung von bekannten und/oder durch spezielle Experimente geschaffenen physikalischen Gesetzen und als erstes Modell mindestens ein Modell der Längsbeanspruchungen (Fx), der Querbeanspruchungen (Fy) und eines Moments der Selbstausrichtung (Mz), das von dem Reifen zwischen dem Boden und dem Fahrzeug übertragen wird, in Abhängigkeit von spezifischen physikalischen Parametern, einschließlich eines Haftungskoeffizienten und eines Schermoduls des Gummis des Reifens, und in Abhängigkeit von dynamischen Parametern, die mit den physikalischen Bedingungen des Rollens und der Verwendung des Reifens verbunden sind, zu erstellen, wobei das Moment der Selbstausrichtung mit der Intensität der Längs- und Querbeanspruchungen und mit ihrer Verteilung in dem bestehenden Kontaktbereich verbunden ist, wobei die Vorgänge des Zuweisens mindestens darin bestehen, den dynamischen Parametern und den spezifischen Parametern (5) numerische Werte zuzuordnen (4), und die Vorgänge des Lösens darin bestehen, unter Verwendung von mindestens dem ersten Modell und den Werten, die den dynamischen Parametern und den spezifischen physikalischen Parametern zugeordnet werden, Werte der Längsbeanspruchungen (Fx), der Querbeanspruchungen (Fy) und des Moments der Selbstausrichtung (Mz) abzuleiten, **dadurch gekennzeichnet, dass** die Vorgänge des Modellierens auch das Erstellen als zweites Modell eines lokalen Modells der Erwärmung, das Schwankungen einer Kontakttemperatur der Lauffläche mit dem Boden vom Eintreten in bis zum Austreten aus dem Kontaktbereich infolge des Kontakts der Lauffläche mit dem Boden und des Gleitens der Lauffläche auf dem Boden ausdrückt, und das Erstellen als drittes Modell eines globalen Modells der Erwärmung und des Wärmeflusses aufweisen, wobei dieses dritte Modell Schwankungen über einen Zeitraum von mindestens einer Radumdrehung einer periphären Temperatur der Lauffläche und einer inneren Temperatur des Reifens in Abhängigkeit von zuvor bekannten oder geschätzten Werten der periphären und inneren Temperatur, eines Wärmeleitungskoeffizienten der Lauffläche und von Phänomenen mit thermodynamischer Komponente, wie innere Verformungen, die der Reifen erfahren hat, Wärmeaustausch zwischen dem Reifen und seiner Umgebung und Gleiten der Lauffläche auf dem Boden, ausdrückt, dadurch, dass mindestens der Haftungskoeffizient und das Schermodul in dem ersten Modell als Variablen, die jeweils von der periphären und der inneren Temperatur abhängig sind, eingreifen, dadurch, dass der Wert der periphären Temperatur (Ts), der durch die Vorgänge des Lösens erhalten wird, die sich auf das dritte Modell beziehen, von Vorgängen des Lösens, die sich auf das zweite Modell beziehen, verwendet werden, um die Temperaturabhängigkeit des Haftungskoeffizienten zu berücksichtigen, und dadurch, dass der Wert der inneren Temperatur (Ti), der durch die Vorgänge des Lösens erhalten wird, die sich auf das dritte Modell beziehen, von Vorgängen des Lösens, die sich auf das erste Modell beziehen, verwendet werden, um die Temperaturabhängigkeit des Schermoduls des Gummis des Reifens zu berücksichtigen.

2. Verfahren zur Simulation nach Anspruch 1, **dadurch gekennzeichnet, dass** das erste Modell Gleichungen umfasst, die mit den Gleichgewichtsbedingungen der elementaren Scher- und Reibungskräfte der Lauffläche in dem Kontaktbereich verbunden sind, dadurch, dass dieses Verfahren mindestens eine iterative Berechnungsphase aufweist, die aus einer Abfolge von Berechnungszyklen gebildet ist, und dadurch, dass jeder Berechnungszyklus mindestens einen Vorgang des Lösens, der sich auf das erste Modell bezieht, und einen Vorgang des Auflösens aufweist, der sich auf das zweite Modell bezieht.

3. Verfahren zur Simulation nach Anspruch 2, **dadurch gekennzeichnet, dass** der Kontaktbereich mindestens in einer ersten seiner Abmessungen diskretisiert wird, dadurch, dass jeder Zyklus von jeder iterativen Phase eine Reihe von Vorgängen des Analysierens der Gleichgewichtsbedingungen der elementaren Scher- und Reibungskräfte auf jeweiligen elementaren Flächen aufweist, die von dem Kontaktbereich verschieden sind, die entlang der ersten Abmessung des Kontaktbereichs verteilt sind, und dadurch, dass jeder Zyklus der iterativen Phase unterbrochen wird, wenn die Gesamtheit der elementaren Flächen, die bei diesem Zyklus in Betracht gezogen werden, den Kontaktbereich bedeckt.

4. Verfahren zur Simulation nach Anspruch 2, **dadurch gekennzeichnet, dass** das erste Modell erstellt wird, indem in Erwägung gezogen wird, dass der Kontaktbereich einen einzigen haftenden Kontaktbereich und einen einzigen gleitenden Kontaktbereich aufweist, die voneinander durch einen Übergangspunkt getrennt sind, dadurch, dass das erste Modell die Form eines Systems von Gleichungen, die mindestens in Abhängigkeit von den dynamischen Parametern, den spezifischen Parametern und der Abszisse (b) des Übergangspunktes ausgedrückt werden, annimmt, und dadurch, dass jede iterative Phase Phänomenen gewidmet ist, die während eines entsprechenden elementaren Zeitintervalls auftreten, und dadurch, dass jede iterative Phase umgesetzt wird, um durch aufeinanderfolgende Approximierungen und mindestens ausgehend von vorher bekannten oder geschätzten Werten der Abszisse (bo) des Übergangspunktes, der Querbeanspruchungen (Fyo) und des Moments der Selbstausrichtung (Mzo), neue Werte der Abszisse (b) des Übergangspunktes, der Querbeanspruchungen (Fy) und des Moments der Selbstausrichtung (Mz) zu lösen, die das System von Gleichungen des ersten Modells für die Werte lösen, die den dynamischen Parametern und den spezifischen Parametern zugeordnet werden.

5. Verfahren zur Simulation nach Anspruch 4, **dadurch gekennzeichnet, dass** jeder neue Berechnungszyklus von jeder iterativen Phase die Vorgänge (9) aufweist, die mindestens darin bestehen:

- einen neuen provisorischen Wert der Abszisse des Übergangspunktes ausgehend von den Gleichungen des Gleichgewichts der elementaren Kräfte und den vorher bekannten oder geschätzten Werten der Querbeanspruchungen und des Moments der Selbstausrichtung zu berechnen;
- ausgehend von dem neuen provisorischen Wert der Abszisse des Übergangspunktes und den Gleichungen, die die Querbeanspruchungen und das Moment der Selbstausrichtung mit den dynamischen Parametern, den spezifischen Parametern und der Abszisse des Übergangspunktes verbinden, neue Werte der Querbeanspruchungen und des Moments zu berechnen, die für einen eventuellen weiteren Berechnungszyklus verwendbar sind;
- die iterative Phase mindestens ein Mal bedingt (10) zu unterbrechen, wenn die Differenz zwischen dem neuen provisorischen Wert der Abszisse des Übergangspunktes und dem vorher bekannten oder geschätzten Wert dieser Abszisse niedriger als eine vorbestimmte Präzisionsgrenze ist, und
- beim Unterbrechen der iterativen Phase den Längs- und Querbeanspruchungen und dem Moment der Selbstausrichtung als Werte für diese Phase die neuen Werte der Querbeanspruchungen und des Moments der Selbstausrichtung zuzuordnen (12), die im letzten Berechnungszyklus erhalten werden.

6. Verfahren zur Simulation nach Anspruch 4 oder 5, **dadurch gekennzeichnet, dass** es ferner einen Vorgang aufweist, der nach dem Ende von jeder iterativen Phase umgesetzt wird und darin besteht, mindestens die dynamischen Parameter zu aktualisieren (4), um die Entwicklungen zu berücksichtigen, die diese Parameter während der Zeit der Ausführung der iterativen Phase erfahren haben, und um eine neue iterative Phase (8-10) einzuleiten.

7. Verfahren zur Simulation nach einem der Ansprüche 1 bis 6, **dadurch gekennzeichnet, dass** die Vorgänge des Lösens, die sich auf das dritte Modell beziehen, außerhalb von jeder iterativen Phase durchgeführt werden.

8. Verfahren zur Simulation nach einem der Ansprüche 1 bis 7, **dadurch gekennzeichnet, dass** jeder iterativen Phase eine vorbereitende Phase (7) vorausgeht, während der kontingente Größen, die die Abmessungen des Kontaktbereichs umfassen, in Abhängigkeit von den Werten berechnet werden, die den dynamischen Parametern und den spezifischen Parametern zugeordnet werden, wobei jede kontingente Größe in der iterativen Phase mit einem Wert genutzt wird, der ihr während der vorbereitenden Phase zugeordnet wird.

9. Anwendung des Verfahrens nach einem der vorhergehenden Ansprüche zur Simulation des dynamischen Verhaltens eines Fahrzeugs, das mit einem Fahrgestell und mehreren Reifen in einer Rollsituation auf dem Boden versehen ist, Anwendung, wobei jedes des ersten, zweiten und dritten Modells für jeden Reifen genutzt wird und einem bestimmten Modell der Dynamik des Fahrgestells zugeordnet wird, wobei das Modell des Fahrgestells den Modellen für jeden Reifen die Werte von mindestens bestimmten der dynamischen Parameter bereitstellt, und wobei das Modell des Fahrgestells für jeden Reifen die Werte der Längsbeanspruchungen, der Querbeanspruchungen und des Moments der Selbstausrichtung nutzt, die durch das Umsetzen des ersten, zweiten und dritten Modells erhalten werden.

10. Anwendung nach Anspruch 9 des Verfahrens nach einem der Ansprüche 2, 4 bis 8 zur Simulation in Echtzeit des dynamischen Verhaltens eines Fahrzeugs.

**Claims**

1. Process, carried out by a computer, for simulating the physical behavior of a vehicle tire rolling on the ground with which the tire tread has an area of contact including at least one adherent contact zone and at least one sliding contact zone, which process includes at least modeling operations, numeric value assignment operations, and solving operations, in which the modeling operations involve at least establishing, by applying physical laws that are known and/or developed by specific experimentation, and as a first model, a model of the longitudinal forces (Fx), the transverse forces (Fy), and a self-alignment torque (Mz), transmitted by the tire between the ground and the vehicle, on the basis of specific physical parameters, including an adherence coefficient and a shear modulus of the rubber of the tire, and on the basis of dynamic parameters associated with the physical conditions of rolling and use of the tire, in which the self-alignment torque is associated with the intensity of the longitudinal and transverse forces and their distribution in the contact area, in which the assignment operations involve at least assigning (4) numeric values to the dynamic parameters and to the specific parameters (5), and in which the solving operations involve at least deducing, using at least the first model and the values assigned to the dynamic parameters and to the specific physical parameters, the values of the longitudinal forces (Fx), the transverse forces (Fy) and the self-alignment torque (Mz), **characterized in that** the modeling operations also include the establishment, as a second model, of a local heating model expressing variations in a temperature of contact of the tread with the ground from the beginning to the end of the contact area due to the contact and the slip of the tread with the ground, and the establishment, as a third model, of a general heating and thermal flux model, in which said third model expresses variations, over a period of at least one wheel rotation, in a peripheral tread temperature and an internal tire temperature on the basis of values previously known or estimated from peripheral and internal temperatures, a coefficient of thermal conductivity of the tread, and phenomena with a thermodynamic component such as internal deformations of the tire, heat transfers between the tire and its environment, and slip of the tread on the ground, in which at least the adherence coefficient and the shear modulus are involved in the first model as variables, respectively based on the peripheral temperature and the internal temperature, in which the value of the peripheral temperature (Ts), obtained by solving operations concerning the third model, is used by solving operations concerning the second model in order to take into account the temperature dependence of the adherence coefficient, and in which the value of the internal temperature (Ti), obtained by solving operations concerning the third model, is used by solving operations concerning the first model in order to take into account the temperature dependence of the shear modulus of the rubber of the tire.

2. Simulation process according to claim 1, **characterized in that** the first model includes equations associated with the conditions of equilibrium of the basic shear and slip forces of the tread in the contact area, and **in that** this process includes at least one iterative calculation phase consisting of a series of calculation cycles, and **in that** each calculation cycle includes at least one solving operation concerning the first model and one solving operation concerning the second model.

3. Simulation process according to claim 2, **characterized in that** the contact area is discretized at least in a first of its dimensions, **in that** each cycle of each iterative phase includes a series of operations for analyzing the conditions of equilibrium of the basic shear and slip forces on respective basic surfaces different from the contact area, distributed along the first dimension of the contact area, and **in that** each cycle of the iterative phase is interrupted when the set of basic surfaces considered in said cycle covers the contact area.

4. Simulation process according to claim 2, **characterized in that** the first model is established by considering that the contact area includes a single adherent contact zone and a single sliding contact zone separated from one another by a crossing point, **in that** the first model takes the form of a system of equations expressed at least according to dynamic parameters, specific parameters and the abscissa (b) of the crossing point, **in that** each iterative phase is dedicated to phenomena appearing during a corresponding basic time interval, and **in that** each iterative phase is implemented in order to solve, by successive approximations and at least on the basis of values previously known or estimated from the abscissa (bo) of the crossing point, the transverse forces (Fyo), and the self-alignment torque (Mzo), new values of the abscissa (b) of the crossing point, the transverse forces (Fy) and the self-alignment torque (Mz) that solve the system of equations of the first model for the values assigned to the dynamic parameters and to the specific parameters.

5. Simulation process according to claim 4, **characterized in that** each new calculation cycle of each iterative phase includes operations (9) involving at least:

   - calculating a new temporary value of the abscissa of the crossing point on the basis of balance equations of the basic forces and the values previously known or estimated from the transverse forces and the self-alignment torque;

- calculating, on the basis of the new temporary value of the abscissa of the crossing point and equations associating transverse forces and the self-alignment toque with dynamic parameters, specific parameters and the abscissa of the crossing point, new values for the transverse forces and the self-alignment torque that can be used for a possible future calculation cycle;

- conditionally interrupting (10) said iterative phase at least when the difference between the new temporary value of the abscissa of the crossing point and the value previously known or estimated from this abscissa is below a predetermined accuracy limit; and

- interrupting said iterative phase, assigning (12) to the longitudinal and transverse forces and the self-alignment torque, as values for said phase, the new values of the longitudinal and transverse forces and the self-alignment torque obtained in the most recent calculation cycle.

6. Simulation process according to claim 4 or 5, **characterized in that** it also includes an operation carried out after the end of each iterative phase and consisting of updating (4) the dynamic parameters in order to take into account changes in said parameters during the time of execution of the iterative phase, and of entering a new iterative phase (8-10).

7. Simulation process according to any one of claims 1 to 6, **characterized in that** the solving operations concerning the third model are performed outside of each iterative phase.

8. Simulation process according to any one of claims 1 to 7, **characterized in that** each iterative phase is preceded by a preparatory phase (7) during which contingent quantities are calculated, including the dimensions of the contact area, on the basis of the values assigned to the dynamic parameters and to the specific parameters, in which each contingent quantity is used in said iterative phase with a value that was assigned to it in the preparatory phase.

9. Application of the process according to any one of the previous claims to the simulation of the dynamic behavior of a vehicle equipped with a chassis and a plurality of tires rolling on the ground, in which application each of the first, second and third models is used for each tire and associated with a given dynamic chassis model, in which the chassis model provides said models, for each tire, with the values of at least some of the dynamic parameters, and in which the chassis model uses, for each tire, the values of the longitudinal forces, the transverse forces and the self-alignment torque obtained by implementing said models.

10. Application according to claim 9 of the process according to any one of claims 2 or 4 to 8 to the real-time simulation of the dynamic behavior of a vehicle.

# Figure 1

Z

Sens de rotation
de la roue

Centre roue

Sens d'avancée
de la roue

Y

X

Aire de

sortie

entrée

X

entrée

δ

Y

sortie

Plan de jante

Z

angle de
carrossage γ
positif

plan de
jante

Y

X

Figure 2

Figure 3

Centre de l'aire de    Centre de l'aire de contact
contact déportée    non déportée

jante

déport
transversal
$d_Y$

pneu non
déporté

pneu déporté
transversalement

sol

Effort transversal

Figure 4

Centre de l'aire de
contact non déportée

Centre de l'aire de
contact déportée

pneu non
déporté

déport
longitudinal
$d_X$

pneu déporté
longitudinalement

application d'un effort
longitudinal $F_X$

Figure 5

Plan de jante

$\delta$

X

$\delta'$

Y

Aire de contact

Figure 6

Grandeurs
dynamiques
d'entrée

Grandeurs
de sortie

Taux de glissement

Angle de dérive

Angle de carrossage

Charge

Vitesse

Pression de gonflage

Température de l'air

Température du sol

Temps

Températures
initiales du pneu

- Équations de la
mécanique & thermique
pneu

- méthode de calcul
temps réel

Effort longitudinal

Effort latéral

Couple d'auto-alignement

Température interne de
la gomme

Température de surface
du pneu

Paramètres
spécifiques d'entrée

Figure 7

Figure 8

Figure 9

Figure 10

Figure 11

Figure 12

FIG.13

# EP 2 057 567 B1

FIG. 14a

Modèle thermique global

| Paramètres dynamiques | Paramètres spécifiques | Sorties du modèle mécanique |
|---|---|---|
| Fz, $\delta$, y, g, V, Pg, Tair, Tsol | $R_L, R_{LL}, kT, S2,...$ | Fx,Fy, longueur glissée, efforts de frottement ... |

Profil de température de la gomme $T^{n-1}$

Calcul des termes d'échange à la surface du pneu:
- flux de convection avec l'air
- flux de conduction avec le sol
- flux de frottement gomme/sol

Calcul des temps caractéristiques des termes d'échange à la surface du pneu:
- Temps d'échange par convection avec l'air
- Temps d'échange par conduction avec le sol
- Temps d'application du flux de frottement gomme/sol

Calcul du flux moyen à la surface du pneu sur un tour de roue

Calcul de la puissance dissipée dans la gomme liée au cisaillement maximum dans l'aire de contact

Calcul de flux de chaleur à l'interface gomme / nappes sommet

Résolution de l'équation de la chaleur dans l'épaisseur de la gomme.

Sorties :
Profil de température de la gomme $T^n$
Température de surface $Ts^n$
Température moyenne $Tm^n$

FIG. 14b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1516751 A
- EP 1371534 A
- US 20010020386 A

**Littérature non-brevet citée dans la description**

- **M. PACEJKA.** *Magic Formula,* 1996